# EUROPEAN PATENT APPLICATION

(11) **EP 2 253 495 A2**
(43) Date of publication of application: **24.11.2010**
(21) Application number: 10162961.6
(22) Date of filing: 17.05.2010
(51) Int. Cl.: B60H 1/00, B60H 1/02, B60H 1/32

(54) **Vehicle air conditioner**

(30) Priority: 07.10.2009 JP 2009232985; 19.05.2009 JP 2009121368
(71) Applicant: Kabushiki Kaisha Toyota Jidoshokki, Kariya-shi, Aichi 448-8671 (JP)
(72) Inventor: Yokomachi, Naoya, Kariya-shi Aichi 448-8671 (JP); Kawaguchi, Masahiro, Kariya-shi Aichi 448-8671 (JP); Kubo, Hidehito, Kariya-shi Aichi 448-8671 (JP); Kato, Hirohisa, Kariya-shi Aichi 448-8671 (JP); Akiyama, Hirokuni, Kariya-shi Aichi 448-8671 (JP); Morisaku, Naoto, Kariya-shi Aichi 448-8671 (JP); Suzuki, Junya, Kariya-shi, Aichi-ken (JP); Nishimori, Noritaka, Kariya-shi Aichi 448-8671 (JP)
(74) Representative: Vollnhals, Aurel

(57) **Abstract**

A vehicle air conditioner includes a first heat exchanger (1), wherein air around the first heat exchanger is supplied into a vehicle compartment, a heat storage unit (3), an in-vehicle circuit (11-14) that connects between the first heat exchanger (1) and the heat storage unit (3), a second heat exchanger (5), wherein air around the second heat exchanger (5) is sent outside a vehicle, a vehicle system (7), wherein the vehicle system (7) generates exhaust heat, an out-vehicle circuit (15-18), a connection circuit (19,21) that connects between the in-vehicle and the out-vehicle circuits, a plurality of valves (23,25) operating so that the in-vehicle circuit (11-14) and the out-vehicle circuit (15-18) are connected or disconnected from each other through the connection circuit (19,21) and a control device (29) for controlling states of the valves.

## Description

### BACKGROUND OF THE INVENTION

The present invention relates to a vehicle air conditioner.

A conventional vehicle air conditioner is disclosed in Japanese Patent Application Publication H06-99724. The vehicle air conditioner shown in FIG. 2 of the Publication includes a radiator and a heat storage unit. The radiator releases exhaust heat outside the vehicle. The heat storage unit includes a heat storage medium that can store heat. The heat storage unit is disposed so as to surround the radiator and can store the heat released by the radiator. A fan is provided adjacent to the heat storage unit for supplying air around the heat storage unit to a vehicle compartment. Thus, the vehicle compartment is warmed by the vehicle air conditioner.

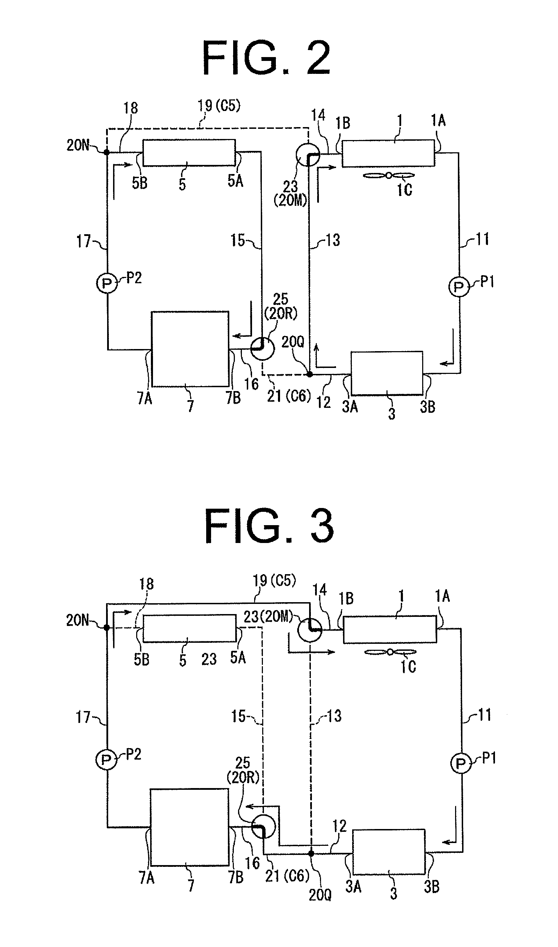

The vehicle air conditioner shown in FIG. 3 of the above Publication includes a circulation device and the heat storage unit. In the vehicle air conditioner, the circulation device circulates hot or cold water between the circulation device and the heat storage unit so as to warm or cool the compartment.

The vehicle air conditioner which stores positive or negative heat in the heat storage medium thereby to prevent useless heat releasing is advantageous in terms of energy saving.

However, the above conventional vehicle air conditioner cannot warm the compartment sufficiently when the heat storage medium does not store sufficient heat.

The present invention which has been made in view of the above problem is directed to providing an energy-saving vehicle air conditioner that offers comfortable air conditioning by making use of the exhaust heat from the vehicle system.

### SUMMARY OF THE INVENTION

A vehicle air conditioner includes a first heat exchanger, wherein air around the first heat exchanger is supplied into a vehicle compartment, a heat storage unit, an in-vehicle circuit that connects between the first heat exchanger and the heat storage unit, a second heat exchanger, wherein air around the second heat exchanger is sent outside a vehicle, a vehicle system, wherein the vehicle system generates exhaust heat, an out-vehicle circuit, a connection circuit that connects between the in-vehicle and the out-vehicle circuits, a plurality of valves operating so that the in-vehicle circuit and the out-vehicle circuit are connected or disconnected from each other through the connection circuit and a control device for controlling states of the valves.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a schematic configuration diagram showing a vehicle air conditioner according to a first embodiment of the present invention;
FIG. 2 is a schematic configuration diagram of the vehicle air conditioner according to the first embodiment of the present invention, showing a state wherein an in-vehicle circuit is not in communication with an out-vehicle circuit;
FIG. 3 is a schematic configuration diagram of the vehicle air conditioner according to the first embodiment of the present invention, showing a state wherein the in-vehicle circuit is in communication with the out-vehicle circuit;
FIG. 4 is a schematic configuration diagram of a vehicle air conditioner according to a second embodiment of the present invention, showing a state wherein an in-vehicle circuit is not in communication with an out-vehicle circuit;
FIG. 5 is a schematic configuration diagram of the vehicle air conditioner according to the second embodiment of the present invention, showing a state wherein the in-vehicle circuit is in communication with the out-vehicle circuit;
FIG. 6 is a schematic configuration diagram showing a vehicle air conditioner according to a third embodiment of the present invention;
FIG. 7 is a schematic configuration diagram of the vehicle air conditioner according to the third embodiment of the present invention, showing a state thereof that is different from that of FIG. 6;
FIG. 8 is a schematic configuration diagram of a vehicle air conditioner according to a fourth embodiment of the present invention;
FIG. 9 is a schematic configuration diagram of the vehicle air conditioner according to the fourth embodiment of the present invention, showing a state thereof that is different from that of FIG. 8;
FIG. 10 is a schematic configuration diagram of a vehicle air conditioner according to a fifth embodiment of the present invention;
FIG. 11 is a schematic configuration diagram of the vehicle air conditioner according to the fifth embodiment of the present invention, showing a state thereof that is different from that of FIG. 10;
FIG. 12 is a schematic configuration diagram of a vehicle air conditioner according to a sixth embodiment of the present invention;
FIG. 13 is a schematic configuration diagram of the vehicle air conditioner according to the sixth embodiment of the present invention, showing a state thereof that is different from that of FIG. 12;
FIG. 14 is a schematic configuration diagram showing a vehicle air conditioner according to a seventh embodiment of the present invention;
FIG. 15 is a schematic configuration diagram showing an example of tube connection in the vehicle air conditioner according to the seventh embodiment of the present invention;
FIG. 16 is a schematic configuration diagram showing another example of tube connection in the vehicle air conditioner according to the seventh embodiment of the present invention;
FIG. 17 is a schematic configuration diagram showing still another example of tube connection in the vehicle air conditioner according to the seventh embodiment of the present invention;
FIG. 18 is a schematic configuration diagram showing yet another example of tube connection in the vehicle air conditioner according to the seventh embodiment of the present invention;
FIG. 19 is a schematic configuration diagram showing a vehicle air conditioner according to an eighth embodiment of the present invention;
FIG. 20 is a schematic configuration diagram showing an example of tube connection in the vehicle air conditioner according to the eighth embodiment of the present invention;
FIG. 21 is a schematic configuration diagram showing another example of tube connection of the vehicle air conditioner according to the eighth embodiment of the present invention;
FIG. 22 is a schematic configuration diagram showing still another example of tube connection in the vehicle air conditioner according to the eighth embodiment of the present invention;
FIG. 23 is a schematic configuration diagram showing still another tube connection in the vehicle air conditioner according to the eighth embodiment of the present invention;
FIG. 24 is a schematic configuration diagram showing still another example of tube connection in the vehicle air conditioner according to the eighth embodiment of the present invention;
FIG. 25 is a schematic configuration diagram showing still another example of tube connection in the vehicle air conditioner according to the eighth embodiment of the present invention;
FIG. 26 is a schematic configuration diagram showing still another example of tube connection in the vehicle air conditioner according to the eighth embodiment of the present invention;
FIG. 27 is a schematic configuration diagram showing a vehicle air conditioner according to a ninth embodiment of the present invention;
FIG. 28 is a schematic configuration diagram showing an example of tube connection in the vehicle air conditioner according to the ninth embodiment of the present invention;
FIG. 29 is a schematic configuration diagram showing another example of tube connection in the vehicle air conditioner according to the ninth embodiment of the present invention;
FIG. 30 is a schematic configuration diagram showing still another example of tube connection in the vehicle air conditioner according to the ninth embodiment of the present invention;
FIG. 31 is a schematic configuration diagram showing still another example of tube connection in the vehicle air conditioner according to the ninth embodiment of the present invention;
FIG. 32 is a schematic configuration diagram showing still another example of tube connection in the vehicle air conditioner according to the ninth embodiment of the present invention;

### DETAILED DESCRIPTION OF THE PREFERRED EMBODIMENTS

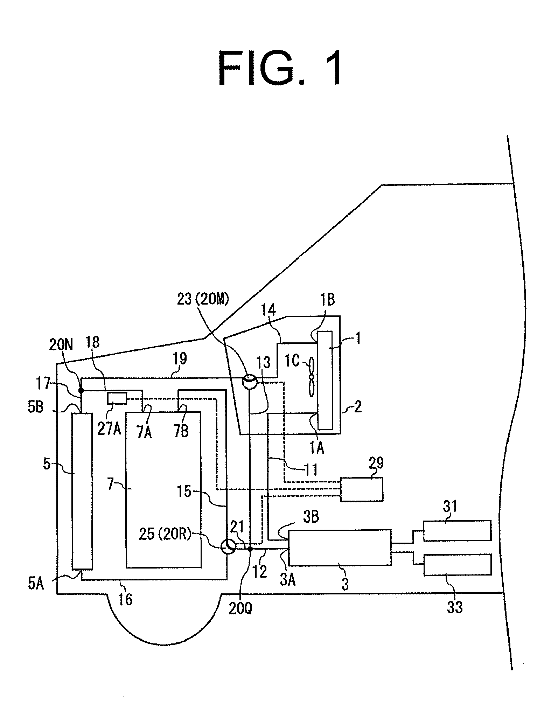

The following will describe the first through ninth embodiments of the present invention with reference to FIGS. 1 through 32.

The vehicle air conditioner according to the first embodiment is installed in a hybrid or an electric vehicle. As shown in FIG. 1, the vehicle air conditioner includes a heater core 1 as a heat exchanger (hereinafter referred to as a first heat exchanger), a heat storage unit 3, a condenser 5 as a heat exchanger (hereinafter referred to as a second heat exchanger) and a vehicle system 7.

As shown in FIGS. 2 and 3, the heater core 1 has a first outlet 1A through which water as heat exchange medium flows out and a first inlet 1B through which water flows in. As shown in FIG. 1, the heater core 1 is provided within a duct 2 and a fan 1C is provided at a position adjacent to the heater core 1. When the fan 1C is driven, the air around the heater core 1 is guided by the duct 2 and supplied into a vehicle compartment.

As shown in FIGS. 2 and 3, the heat storage unit 3 has a second outlet 3A through which water flows out and a second inlet 3B through which water flows in. The heat storage unit 3 has a heat storage medium and can exchange heat stored in the heat storage medium with water.

The heater core 1 is connected to the heat storage unit 3 through tubes 11 through 14. The tube 11 connects the first outlet 1A of the heater core 1 and the second inlet 3B of the heat storage unit 3. The tube 12 connects the second outlet 3A of the heat storage unit 3 and the tube 13. The tube 13 connects the tube 12 and a three-way valve 23. The tube 14 connects the three-way valve 23 and the first inlet 1B of the heater core 1. The tubes 11 through 14 form a circuit of tubes which is an in-vehicle circuit. A first pump P1 is provided in the tube 11 for circulating water.

A condenser 5 has a third outlet 5A through which water flows out and a third inlet 5B through which water flows in. The condenser 5 is disposed in the front of the vehicle and air around the condenser 5 is sent outside the vehicle by the wind caused when the vehicle is running.

The vehicle system 7 includes heat-generating components such as a hybrid engine, an inverter, a motor, a converter and the like. The vehicle system 7 includes a water jacket (not shown) having a fourth outlet 7A through which water flows out and a fourth inlet 7B through which water flows in.

The condenser 5 is connected to the vehicle system 7 through tubes 15 through 18 as a circuit of tubes which is an out-vehicle circuit. The tube 15 connects the third outlet 5A of the condenser 5 and a three-way valve 25. The tube 16 connects the three-way valve 25 and the fourth inlet 7B of the vehicle system 7. The tube 17 connects the fourth outlet 7A of the vehicle system 7 and the tube 18. The tube 18 connects the tube 17 and the third inlet 5B of the condenser 5. The tubes 15 through 18 form the out-vehicle circuit. A second pump P2 is provided in the tube 17 for circulating water.

A tube 19 is connected at one end thereof to a fourteenth connection point 20N connecting the tubes 17 and 18 and at the other end thereof to the three-way valve 23. The tube 19 is a fifth connection passage C5 connecting the tubes 17 and 13. A tube 21 is connected at one end thereof to a fifteenth connection point 20Q connecting the tubes 12 and 13 and at the other end thereof to the three-way valve 25. The tube 21 is a sixth connection passage C6 connecting the tubes 13 and 15.

The three-way valve 23 to which the tubes 13, 14 and 19 are connected is a first valve. The three-way valve 23 is located at a thirteenth connection point 20M. The three-way valve 23 is a solenoid-operated valve and operable to selectively connect the tube 14 to the tube 13 or to the tube 19. The three-way valve 23 may be located at a fourteenth connection point 20N connecting the tubes 17, 18.

The three-way valve 25 to which the tubes 15, 16 and 21 are connected is a second valve. The three-way valve 25 is located at a sixteenth connection point 20R. The three-way valve 25 is a solenoid-operated valve and operable to connect the tube 16 to the tube 15 or to the tube 21. The three-way valve 25 may be located at the fifteenth connection point 20Q.

As shown in FIG. 1, a temperature sensor 27A as a temperature detecting device is provided in the tube 18. The temperature sensor 27A is operable to detect the temperature of the tube 18 that represents the temperature of water flowing through the tube 18. The first and second pumps P1, P2, the three-way valves 23, 25 and the temperature sensor 27A are electrically connected to a control device 29 that controls the operation of such components or devices.

A heating device 31 that supplies positive heat to heat storage medium or heat exchange medium for heating and a cooling device 33 that supplies negative heat to the heat storage medium or heat exchange medium for cooling are connected to the heat storage unit 3.

In the vehicle air conditioner, the heat storage medium of the heat storage unit 3 stores positive or negative heat and exchanges the heat with water. The vehicle system 7 generates exhaust heat.

### (In Cold Environment)

During the heating mode operation of the air conditioner in cold environment, the heat storage medium of the heat storage unit 3 stores positive heat. When the water temperature detected by the temperature sensor 27A is below a threshold value in the heating mode of the air conditioner, the control device 29 operates the three-way valves 23, 25 in such a way that the in-vehicle circuit of tubes 11 through 14 and the out-vehicle circuit of tubes 15 through 18 are disconnected from each other, as shown in FIG. 2. Then, the control device 29 also operates the first and the second pumps P1, P2.

In this state of the air conditioner, water circulates between the heater core 1 and the heat storage unit 3 in arrow direction. Warm air around the heater core 1 is supplied to the vehicle compartment, thereby warming the compartment.

In this state of the air conditioner, water circulates also between the condenser 5 and the vehicle system 7 in arrow direction. Therefore, the exhaust heat of the vehicle system 7 is transferred to the condenser 5 by the flow of water. Thus, since the air around the condenser 5 is sent outside the vehicle and the exhaust heat of the vehicle system 7 is released outside the vehicle, storing the heat in the vehicle is prevented.

On the other hand, when temperature of water detected by the temperature sensor 27A exceeds the threshold value, the control device 29 operates the three-way valves 23, 25 so as to connect the circuit of tubes 11, 12, 14, 16, 17 and the circuit of tubes 21, 19, as shown in FIG. 3. In this state of the air conditioner, water circulates not only between the heater core 1 and the heat storage unit 3 but also among the heater core 1, the heat storage unit 3 and the vehicle system 7. Therefore, since the exhaust heat of the vehicle system 7 is added when the positive heat stored in the heat storage medium of the heat storage unit 3 is deficient, the compartment can be warmed sufficiently. Since the exhaust heat of the vehicle system 7 is released from the heater core 1, storing the heat in the vehicle is prevented. In this state of the air conditioner, the control device 29 may cause either one of the first and second pumps P1, P2 to be at a stop.

### (In Hot Environment)

During the cooling mode operation of the air conditioner in hot environment, the heat storage medium of the heat storage unit 3 stores negative heat. The control device 29 operates the three-way valves 23, 25 in the cooling mode so as to disconnect the in-vehicle circuit of tubes 11 through 14 and the out-vehicle circuit of tubes 15 through 18, as shown in FIG. 2. In this state, water circulates between the heater core 1 and the heat storage unit 3, so that cold air around the heater core 1 is supplied into the compartment, thereby cooling the compartment.

According to the above-described first embodiment, the vehicle air conditioner stores positive or negative heat in the heat storage medium thereby to prevent useless heat releasing. Thus, the vehicle air conditioner is advantageous in energy saving.

Additionally, the vehicle air conditioner offers comfortable air conditioning.

The vehicle air conditioner which uses the three-way valves 23, 25 as a valve reduces the number of valves and the manufacturing cost can be reduced, accordingly.

Furthermore, in the vehicle air conditioner according to the above embodiment wherein the heat storage medium is heated by the heating device 31 when the positive heat is insufficient and the heat storage medium is cooled by the cooling device 33 when the negative heat is insufficient, the compartment can be warmed or cooled over a long time.

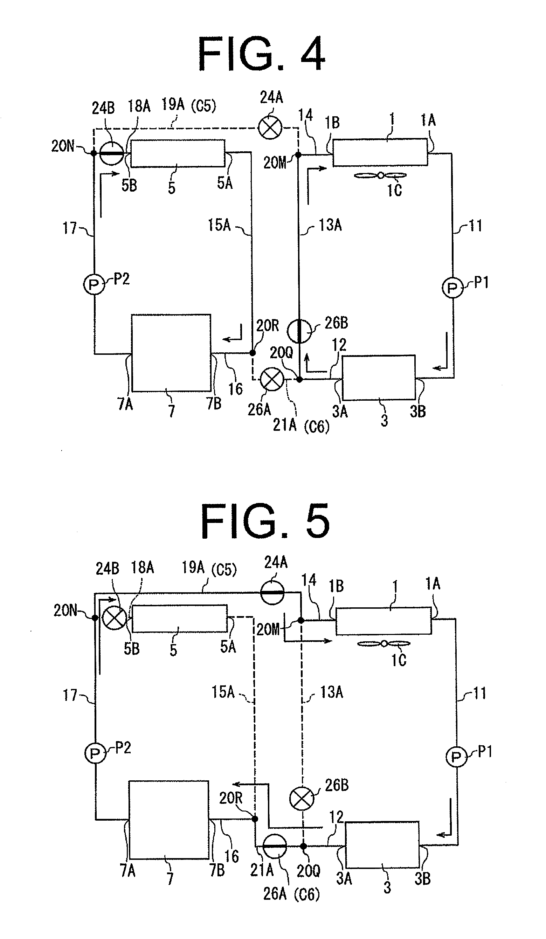

In the vehicle air conditioner according to the second embodiment shown in FIGS. 4 and 5, tubes 11, 12, 13A, 14 form an in-vehicle circuit. The tube 12 connects the second outlet 3A of the heat storage unit 3 and the fifteenth connection point 20Q. The tube 13A connects the fifteenth connection point 20Q and the thirteenth connection point 20M. The tube 14 connects the thirteenth connection point 20M and the first inlet 1B of the heater core 1.

Tubes 15A, 16, 17, 18A form an out-vehicle circuit. The tube 15A connects the third outlet 5A of the condenser 5 and the sixteenth connection point 20R. The tube 16 connects the sixteenth connection point 20R and the fourth inlet 7B of the vehicle system 7. The tube 17 connects the fourth outlet 7A of the vehicle system 7 and the fourteenth connection point 20N. The tube 18A connects the fourteenth connection point 20N and the third inlet 5B of the condenser 5.

A tube 21A is provided between the fifteenth connection point 20Q and the sixteenth connection point 20R. A tube 19A is provided between the thirteenth connection point 20M and the fourteenth connection point 20N. The tube 21A forms the sixth connection passage C6 and the tube 19A forms the fifth connection passage C5.

Valves 26B, 24B, 26A, 24A as a valve are provided in the tubes 13A, 18A, 21A, 19A, respectively. The valves 26B, 24B, 26A, 24A are solenoid-operated valves. The other elements or components of the vehicle air conditioner are the same as those of the vehicle air conditioner in the first embodiment. The following description will use the same reference numerals for the common elements or components in the first and the second embodiments, and the description of such elements or components will be omitted.

In the vehicle air conditioner, when the water temperature detected by the temperature sensor 27A is below a threshold value during the heating mode of the air conditioner in cold environment, the control device 29 opens the valves 24B, 26B and closes the valves 24A, 26A. Therefore, the circuit of tubes 11, 12, 13A, 14 are disconnected from the circuit of tubes 15A, 16, 17, 18A, as shown in FIG. 4. Then, the control device 29 operates the first and the second pumps P1, P2. Thus, warm air around the heater core 1 is supplied into the vehicle compartment, thereby warming the compartment. Since the air around the condenser 5 is sent outside the vehicle and the exhaust heat of the vehicle system 7 is released outside the vehicle, storing the heat in the vehicle is prevented.

On the other hand, when temperature of water detected by the temperature sensor 27A exceeds the threshold value, the control device 29 closes the valves 24B, 26B and opens the valves 24A, 26A, so that the circuit of tubes 11, 12, 14 is connected with the circuit of tubes 16, 17, as shown in FIG. 5. Thus, since the exhaust heat of the vehicle system 7 is added when the positive heat stored in the heat storage medium of the heat storage unit 3 is deficient, the compartment can be warmed sufficiently. Since the exhaust heat of the vehicle system 7 is released from the heater core 1, storing the heat in the vehicle is prevented. In this state of the air conditioner, the control device 29 may cause either one of the first and second pumps P1, P2 to be at a stop. The use of on-off valves as a valve in the embodiment whose unit price is inexpensive is advantageous in terms of the manufacturing cost. The other advantageous effects are the same as those of the first embodiment.

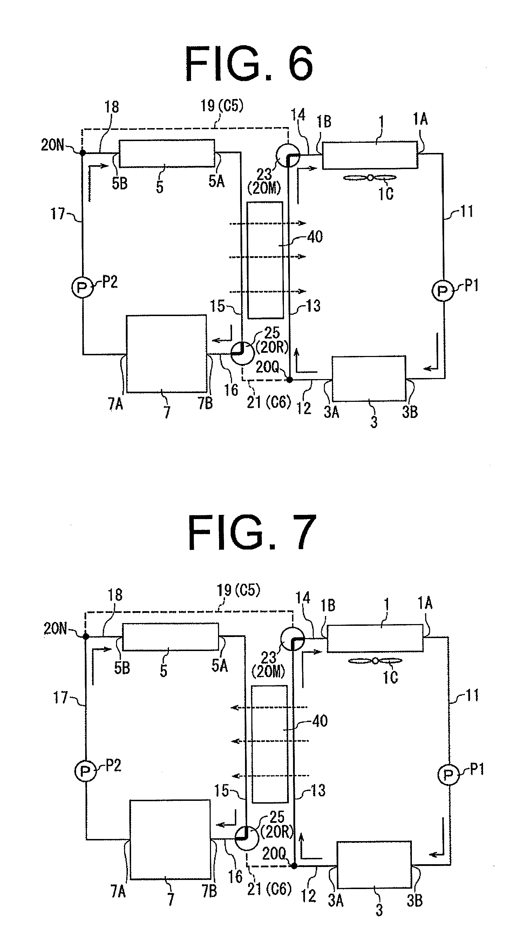

In the vehicle air conditioner according to the third embodiment shown in FIGS. 6 and 7, a peltier device 40 is provided between the tubes 13 and 15. The peltier device 40 forms a second heat pump as a heat pump. Since the tube 13 forms a part of the in-vehicle circuit and the tube 14 forms a part of the out-vehicle circuit, the heat pump is provided between the in-vehicle circuit and the out-vehicle circuit. The peltier device 40 is electrically connected to the control device 29 (refer to FIG. 1). The control device 29 is operable to reverse the direction of electric current flowing through the peltier device 40. The other elements or components of the air conditioner are the same as those in the first embodiment. The following description will use the same reference numerals for the common elements or components in the first and the third embodiments, and the description of such elements or components will be omitted.

In cold environment, the peltier device 40 is operated to absorb heat from the tube 15 and releases heat to the tube 13, as shown in Fig. 6. Since the positive heat of water in the tube 15 is thus transferred to the water in the tube 13, thereby further raising the temperature of the water in the heater core 1, the compartment can be warmed sufficiently. Thus, since the positive heat is absorbed from the water in the tube 15, thereby reducing the temperature of the water in the tube 15, storing heat in the vehicle can be prevented further.

In hot environment, the peltier device 40 is operated to absorb heat from the tube 13 and releases heat to the tube 15, as shown in FIG. 7. Since the positive heat of water in the tube 13 is thus transferred to the water in the tube 15, thereby reducing the temperature of water in the tube 13 further, the compartment can be cooled sufficiently. Thus, since the positive heat is supplied to the water in the tube 15 and released outside the vehicle by the condenser 5, storing heat in the vehicle can be prevented. In this case, it is preferable to control the operation of the second pump P2 by the control device 29 and change the flow direction of water so that the water in the tube 15 flows to the vehicle system 7 through the condenser 5.

The vehicle air conditioner of this embodiment allows switching easily between warming and cooling by only reversing the direction of the electric current flowing through the peltier device 40.

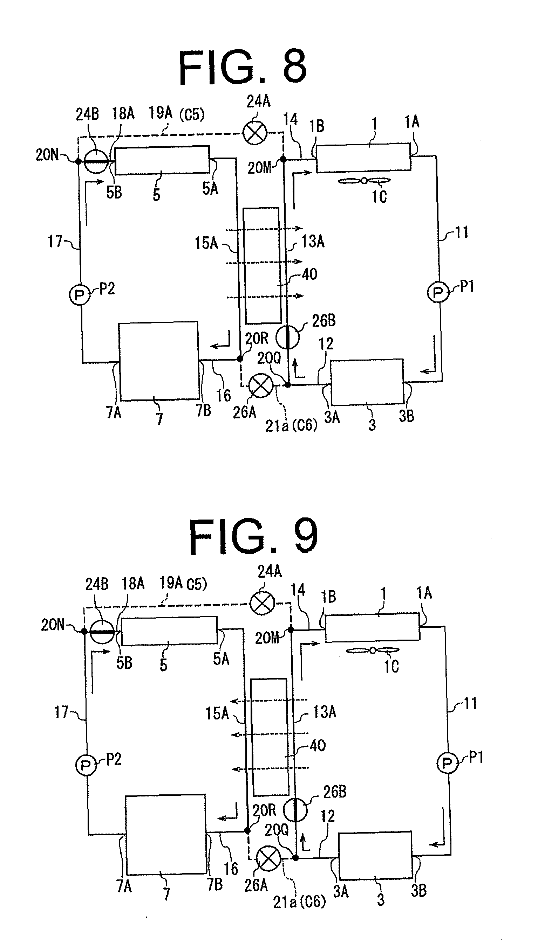

In the vehicle air conditioner according to the fourth embodiment shown in FIGS. 8 and 9, the peltier device 40 is provided between the tubes 13A and 15A. The other elements or components of the vehicle air conditioner are the same as those in the second and third embodiments. The following description will use the same reference numerals for the common elements or components in the second, the third and the fourth embodiments, and the description of such elements or components will be omitted.

In cold environment, the peltier device 40 is operated to absorb heat from the tube 15A and releases heat to the tube 13A, as shown in FIG. 8. In hot environment, on the other hand, the peltier device 40 is operated to absorb heat from the tube 13A and releases heat to the tube 15A, as shown in FIG. 9. Therefore, the same advantageous effects as those of the second and the third embodiments can be obtained in the fourth embodiment.

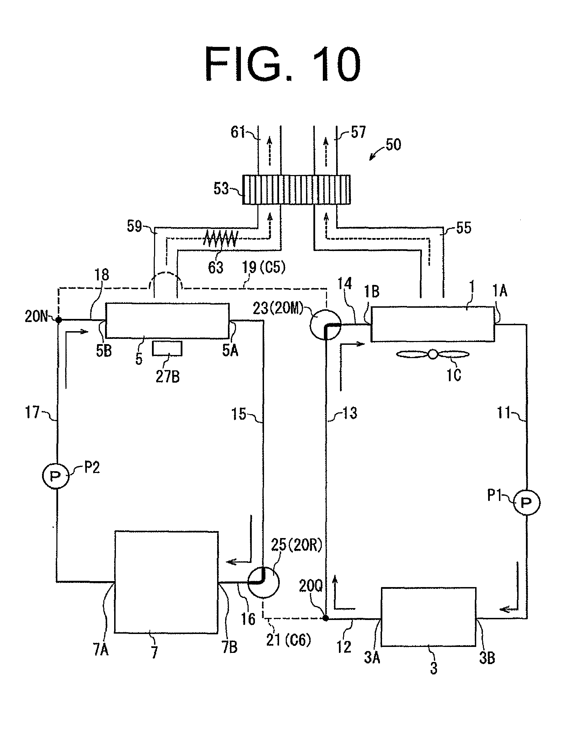

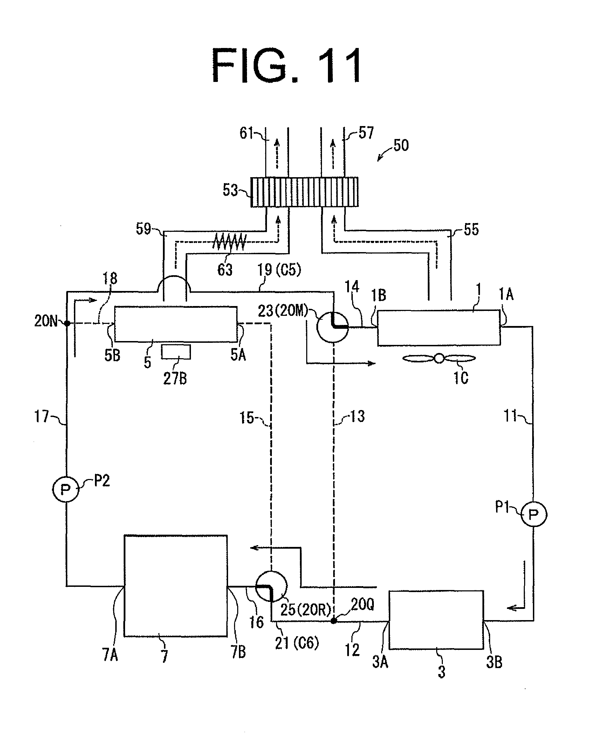

The vehicle air conditioner according to the fifth embodiment shown in FIGS. 10 and 11 is made by adding a desiccant type dehumidifier 50 to the vehicle air conditioner according to the first embodiment. Dashed arrows in FIGS. 10 and 11 indicate the direction of air flowing. The other elements or components are the same as those in the first embodiment. The following description will use the same reference numerals for the common elements or components in the first and the fifth embodiments, and the description of such elements or components will be omitted.

The desiccant type dehumidifier 50 includes a known desiccant rotor 53, a humidity conditioning passage 55 through which humid air flows to the desiccant rotor 53 and a dry air passage 57 through which air dehumidified by the desiccant rotor 53 flows out. The desiccant rotor 53 can be recycled by being heated at a temperature of about 60°C. The desiccant rotor 53 has desiccating and recycling sides and these sides can be replaced by rotation of the desiccant rotor 53. The humidity conditioning passage 55 is opened around the heater core 1 and the dry air passage 57 is opened to the vehicle compartment.

The desiccant type dehumidifier 50 further includes a regeneration air passage 59 through which recycling air flows to the desiccant rotor 53 and a humidified air passage 61 through which air humidified by absorbing moisture in the desiccant rotor 53 flows out. The regeneration air passage 59 is opened around the condenser 5 and the humidified air passage 61 is opened outside the vehicle.

An electric heater 63 as an air heating device is provided in the regeneration air passage 59. A temperature sensor 27B is provided at a position adjacent to the condenser 5 for detecting the temperature of the air around the condenser 5. The electric heater 63 and the temperature sensor 27B are electrically connected to the control device 29 (refer to FIG. 1). The other elements or components are the same as those in the first embodiment. The following description will use the same reference numerals for the common elements or components in the first and the fifth embodiments, and the description of such elements or components will be omitted.

During the heating mode operation of the vehicle air conditioner in cold environment when the in-vehicle circuit of tubes 11 through 14 are disconnected from the out-vehicle circuit of tubes 15 through 18, as shown in FIG. 10, hot and humid air around the heater core 1 is dehumidified into hot dry air after passing through desiccating side of the desiccant rotor 53 and flows into the vehicle compartment. Meanwhile, during the cooling mode operation of the vehicle air conditioner in hot environment, cold and humid air around the heater core1 is dehumidified into cold dry air after passing through the desiccating side of the desiccant rotor 53 and flows into the vehicle compartment.

The recycling air around the condenser 5 flows through the recycling side of the desiccant rotor 53, thereby recycling the desiccant rotor 53, and the air humidified by absorbing moisture from the desiccant rotor 53 flows outside the vehicle. Since the desiccant rotor 53 can be recycled at a temperature of about 60°C, the desiccant rotor 53 is recycled efficiently by the exhaust heat of the vehicle system 7.

When the circuit of tubes 11, 12, 14 communicate with the circuit of tubes 16, 17, as shown in FIG. 11, the heat of the air around the condenser 5 is decreased because no exhaust heat of the vehicle system 7 is released by the condenser 5. When the heat of the air around the condenser 5 falls below the level required for recycling the desiccant rotor 53, the temperature sensor 27B detects temperature of such recycling air and the control device 29 turns on the electric heater 63. Thus, the desiccant rotor 53 can be recycled by adding the heat to the recycling air around the condenser 5. The same is true of the case of FIG. 10 when the exhaust heat of the vehicle system 7 is below the level required for recycling the desiccant rotor 53, e.g., immediately after a start-up of the vehicle.

Thus, in the vehicle air conditioner, the compartment can be warmed or cooled by the dry air that is dehumidified by the desiccant rotor 53. Furthermore, the vehicle air conditioner wherein the desiccant rotor 53 can be recycled by the exhaust heat of the vehicle system 7 is energy-saving. The other advantageous effects are the same as those in the first embodiment.

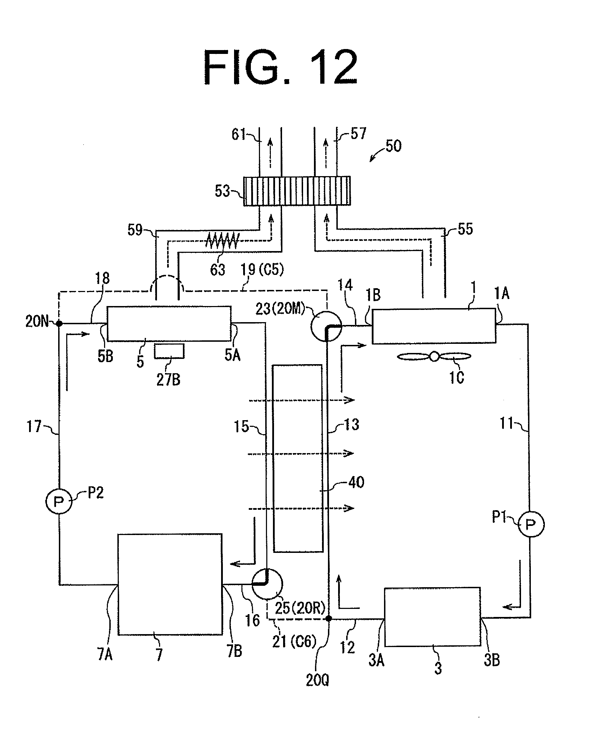

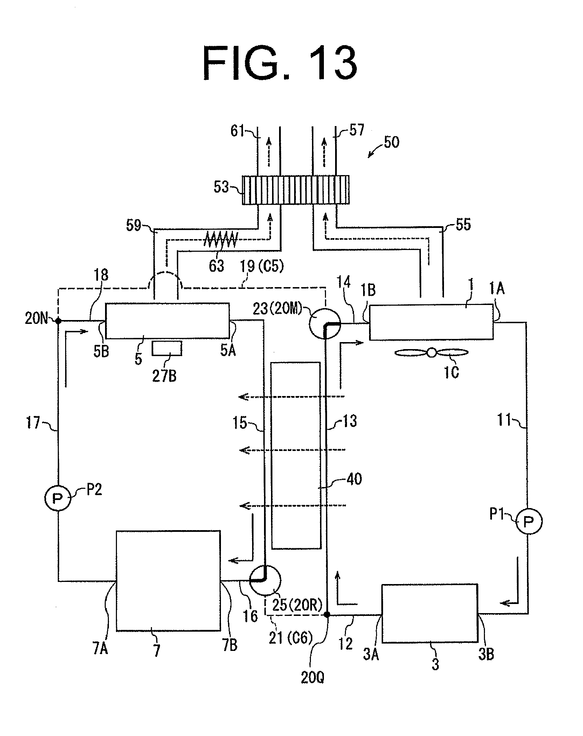

The vehicle air conditioner according to the sixth embodiment shown in FIGS. 12 and 13 is made by adding a desiccant type dehumidifier 50 to the vehicle air conditioner according to the third embodiment. The other elements or components are the same as those in the third and fifth embodiments. The following description will use the same reference numerals for the common elements or components in the third, the fifth and the sixth embodiments, and the description of such elements or components will be omitted.

The same advantageous effects as those of the third and fifth embodiments can be obtained in the vehicle air conditioner according to the sixth embodiment. Changing the direction of water flowing in the tube 15 so that the water flows to the vehicle system 7 through the condenser 5 and the exhaust heat of the vehicle system 7 is absorbed by the peltier device 40, the electric heater 63 can compensate for the shortage of heat when the exhaust heat of the vehicle system 7 is absorbed by the peltier device 40. Furthermore, the heat released by the peltier device 40 and added to the recycling air helps to reduce the frequency of using the electric heater 63.

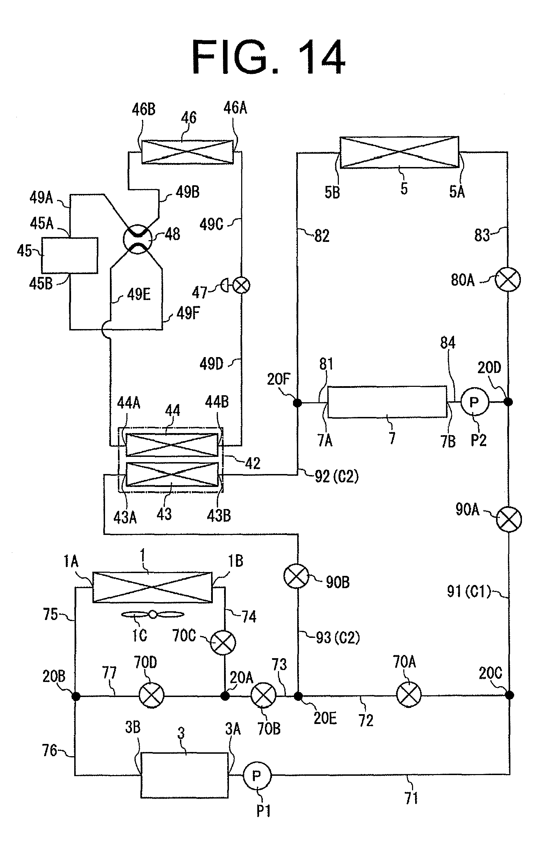

The vehicle air conditioner according to the seventh embodiment shown in FIG. 14 is made by modifying a part of the vehicle air conditioner according to the second embodiment in such a way that a refrigerant heat exchanger 42 and a refrigerant circulation circuit are added.

The refrigerant circulation circuit includes an evaporator 44, a compressor 45, a condenser 46, an expansion valve 47 and tubes 49A through 49F connecting the above components. Refrigerant is enclosed in the refrigerant circulation circuit. The compressor 45 is of electric-type and driven by a battery (not shown) which can be charged with electric power generated at the time of regenerative braking. The compressor 45 is also connected to the control device 29.

The evaporator 44 includes a seventh outlet 44A through which refrigerant flows out and a seventh inlet 44B through which refrigerant flows in. The evaporator 44 functions also as a condenser by changing the pathway of the refrigerant circulation circuit. In that case, the seventh outlet 44A serves as the inlet and the seventh inlet 44B as the outlet.

The condenser 46 includes an eighth outlet 46A through which refrigerant flows out and an eighth inlet 46B through which refrigerant flows in. The condenser 46 functions also as an evaporator by changing the pathway of the refrigerant circulation circuit. In that case, the eighth outlet 46A serves as the inlet and the eighth inlet 46B as the outlet.

A tube 49A connects an outlet 45A of the compressor 45 and a four-way valve 48. A tube 49B connects the four-way valve 48 and the eighth inlet 46B. A tube 49C connects the eighth outlet 46A and the expansion valve 47. A tube 49D connects the expansion valve 47 and the seventh inlet 44B. A tube 49E connects the seventh outlet 44A and the four-way valve 48. A tube 49F connects the four-way valve 48 and an inlet 45B of the compressor 45. The four-way valve 48 is a solenoid-operated selection valve and provided at an intersection of four tubes 49A, 49B, 49E, 49F.

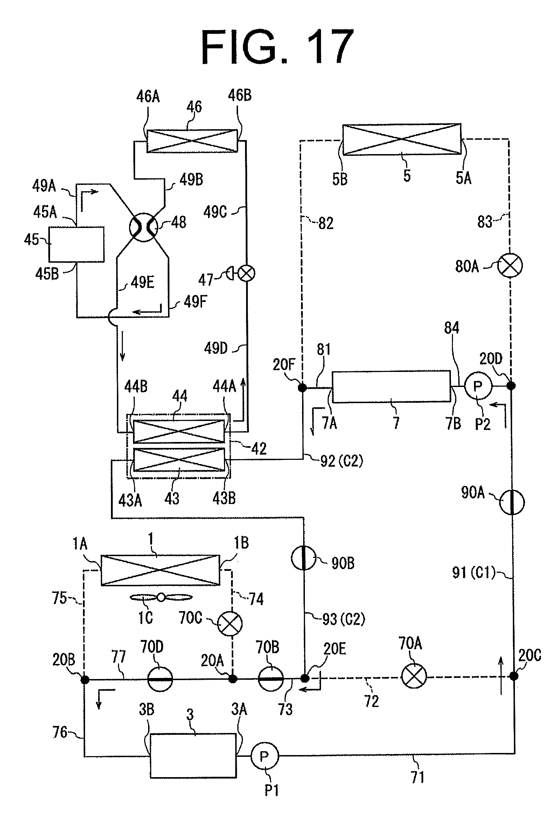

The four-way valve 48 is operable to change the pathway of refrigerant circulation in the tubes 49A through 49E by connecting between the tubes 49A and 49B and between the tubes 49F and 49E (FIGS. 14 through 16) or by connecting between the tubes 49A and 49E and between the tubes 49F and 49B (FIG. 17). Specifically, the hot refrigerant discharged from the outlet 45A of the compressor 45 circulates either through the condenser 46, the expansion valve 47 and the evaporator 44 in this order or through the evaporator 44, the expansion valve 47 and the condenser 46 in this order. The four-way valve 48 is connected to the control device 29 shown in FIG. 1.

As shown in FIG. 14, the heater core 1 is connected to the heat storage unit 3 through tubes 71 through 77. The tube 71 connects the second outlet 3A of the heat storage unit 3 and third connection point 20C. The tube 72 connects the third connection point 20C and fifth connection point 20E. The tube 73 connects the fifth connection point 20E and first connection point 20A. The tube 74 connects the first connection point 20A and the first inlet 1 B of the heater core 1. The tube 75 connects the first outlet 1A of the heater core 1 and second connection point 20B. The tube 76 connects the second connection point 20B and the second inlet 3B of the heat storage unit 3. The tube 77 connects the first connection point 20A and the second connection point 20B. The tube 77 corresponds to a by-pass circuit. The tubes 71 through 77 form an in-vehicle circuit of tubes. Valves 70A through 70D are provided in the tubes 72, 73, 74, 77, respectively. The first pump P1 is provided in the tube 71. The valves 70A through 70C are connected to the control device 29 shown in FIG. 1.

As shown in FIG. 14, the condenser 5 is connected to the vehicle system 7 through tubes 81 through 84. The tube 81 connects the fourth outlet 7A of the vehicle system 7 and sixth connection point 20F. The tube 82 connects the sixth connection point 20F and the third inlet 5B of the condenser 5. The tube 83 connects the third outlet 5A of the condenser 5 and fourth connection point 20D. The tube 84 connects the fourth connection point 20D and the fourth inlet 7B of the vehicle system 7. The tubes 81 through 84 form an out-vehicle circuit of tubes. A valve 80A is provided in the tube 83. The valve 80A is connected to the control device 29. The second pump P2 is provided in the tube 84. The temperature sensor 27A (refer to FIG. 1) is provided in the tube 82.

As shown in FIG. 14, the connection circuit includes a first connection passage C1 connecting the third connection point 20C and the fourth connection point 20D, and a second connection passage C2 connecting the fifth connection point 20E and the sixth connection point 20F. A connection circuit heat exchanger 43 is provided in the second connection passage C2.

The refrigerant heat exchanger 42 includes the connection circuit heat exchanger 43 and the evaporator 44. The connection circuit heat exchanger 43 transfers heat between the water in the connection circuit heat exchanger 43 and the refrigerant in the evaporator 44. The connection circuit heat exchanger 43 includes a ninth outlet 43A through which the water flows out and a ninth inlet 43B through which the water flows in. The refrigerant heat exchanger 42 forms a part of a first heat pump as a heat pump and also a part of the connection circuit. The evaporator 44 as a part of the refrigerant heat exchanger 42 cooperates with the compressor 45, the condenser 46 and the expansion valve 47 to form the refrigerant circulation circuit and a heat pump.

The first connection passage C1 includes a tube 91 connecting the third connection point 20C and the fourth connection point 20D. The tube 91 communicates with the tubes 71, 72 at the third connection point 20C and with the tubes 83, 84 at the fourth connection point 20D. An valve 90A is provided in the tube 91.

The second connection passage C2 includes a tube 92 connecting the sixth connection point 20F and the ninth inlet 43B and a tube 93 connecting the ninth outlet 43A and the fifth connection point 20E. The tube 93 communicates with the tubes 72, 73 at the fifth connection point 20E. The tube 92 communicates with the tubes 81, 82 at the sixth connection point 20F. An valve 90B is provided in the tube 93. Alternatively, the valve 90B may be provided in the tube 92. The valves 90A, 90B are connected to the control device 29 shown in FIG. 1. The other elements or components are the same as those in the second embodiment. The following description will use the same reference numerals for the common elements or components in the second and the seventh embodiments, and the description of such elements or components will be omitted.

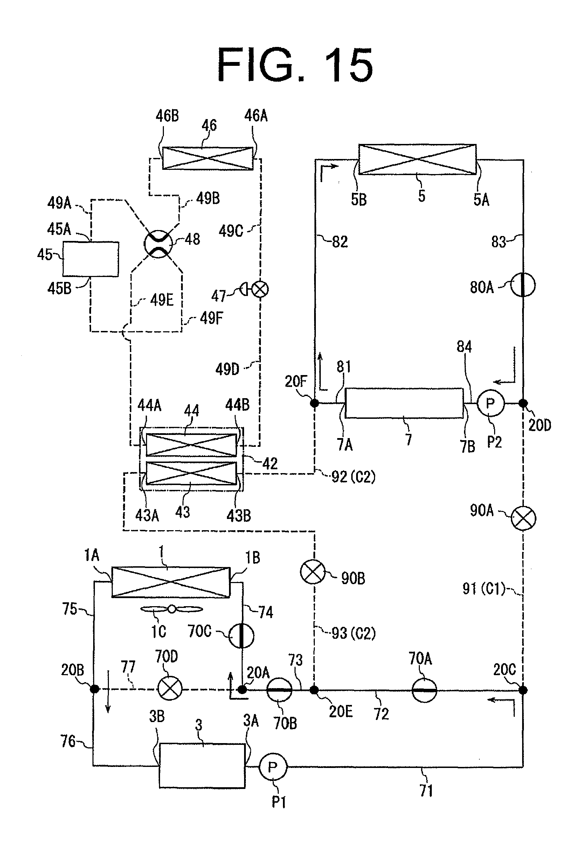

During the heating mode operation of the vehicle air conditioner in a cold environment, when the water temperature detected by the temperature sensor 27A is below a threshold value, the control device 29 opens the valves 70A, 70B, 70C, 80 and closes the valves 70D, 90A, 90B, so that the out-vehicle circuit is disconnected from the in-vehicle circuit as shown in FIG. 15. Specifically, the tubes 71 through 76 communicate with each other, but the tube 77 does not communicate with the tubes 73, 75, 76. The tubes 81 through 84 communicate with each other. The tubes 71, 72 do not communicate with the tube 91. The tubes 72, 73 do not communicate with the tube 93. The tubes 83, 84 do not communicate with the tube 91. The tubes 81, 82 do not communicate with the tube 92. In this state, the control device 29 operates the first and the second pumps P1, P2. Thus, warm air around the heater core 1 is supplied into the compartment, thereby warming the compartment. The air around the condenser 5 is released outside the vehicle.

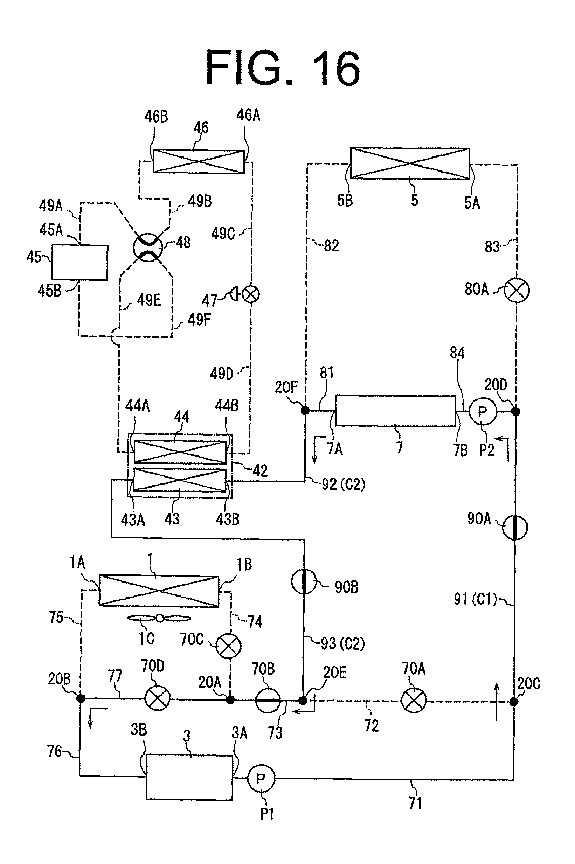

On the other hand, when the water temperature detected by the temperature sensor 27A exceeds the threshold value, the control device 29 opens the valves 90A, 90B and closes the valves 70A, 80A, so that the out-vehicle circuit communicates with the in-vehicle circuit, as shown in FIG. 16. Specifically, the tube 91 communicates with the tubes 71, 84. The tube 92 communicates with the tube 81. The tube 93 communicates with the tube 73. The tubes 71, 91 do not communicate with the tube 72. The tubes 84, 91 do not communicate with the tube 83. Furthermore, the tubes 81, 92 do not communicate with the tube 82. The tubes 73, 93 do not communicate with the tube 72. The tubes 73, 76 communicate with the tube 77. The tubes 73, 77 do not communicate with the tube 74. The tubes 76, 77 do not communicate with the tube 75.

In this state, the water flows in the tube 77, bypassing the heater core 1. Therefore, the exhaust heat of the vehicle system 7 is not used for warming the compartment, but it can be stored in the heat storage medium of the heat storage unit 3.

In the state shown in FIG. 16, when the control device 29 opens the valve 70C and closes the valve 70D, the tubes 73, 75 communicate with the tubes 74, 76, respectively. Neither the tubes 73, 74 nor the tubes 75, 76 communicate with the tube 77. Therefore, the exhaust heat of the vehicle system 7 is supplied into the compartment via the heater core 1. Also, with the valves 70C, 70D both opened, a part of the exhaust heat of the vehicle system 7 is supplied into the compartment and a part of the exhaust heat can be stored in the heat storage medium. This prevents heat from being stored in the vehicle. The control device 29 may be operable so as to activate only either one of the first and the second pumps P1, P2.

When starting the vehicle in cold environment after the vehicle is left for a long time or When re-starting the vehicle after warming the vehicle compartment for a long time, the control device 29 is operated to open the valves 90A, 90B and to close the valves 70A, 80A. By so doing, a circulation circuit same as that shown in FIG. 16 is formed. Namely, the out-vehicle circuit communicates with the in-vehicle circuit. In this state of the air conditioner, the control device 29 causes the compressor 45 to be operated by the regenerative electric power. In this case, the control device 29 causes the four-way valve 48 to be operated such that a circulation circuit as shown by solid arrows in FIG. 17 is made which allows the refrigerant discharged from the outlet 45A of the compressor to flow firstly to the evaporator 44. The control device 29 operates at least one of the first and the second pumps P1, P2.

In this state, heat transferring takes place between cold water in the connection circuit heat exchanger 43 and hot refrigerant in the evaporator 44 in the refrigerant heat exchanger 42. Therefore, the water in the connection circuit heat exchanger 43 is heated by the heat released from the hot refrigerant in the evaporator 44. Thus, positive heat can be stored in the heat storage medium in the heat storage unit 3. The compartment can be warmed before a start-up of the vehicle by opening the valve 70C and closing the valve 70D by the control device 29.

In the state shown in FIG. 17, the valve 70A is opened, the valve 70B is closed and the first pump P1 is stopped, and the second pump P2 is operated. Thus, since the out-vehicle circuit communicates with the connection circuit, the water flows between the out-vehicle circuit and the connection circuit through the tube 72. In this state, the vehicle system 7 can be warmed before a start-up of the vehicle. Therefore, the output power immediately after a start-up of the vehicle can be prevented from being reduced.

When the water temperature detected by the temperature sensor 27A is below a threshold value during the cooling mode operation of the vehicle air conditioner in hot environment, the control device 29 opens the valves 70A, 70B, 70C, 80A and closes the valves 70D, 90A, 90B. The control device 29 activates the first and the second pumps P1, P2. Therefore, a circulation circuit same as that shown in FIG. 15 is formed. Specifically, communication between the in-vehicle circuit and the out-vehicle circuit is shut off. In this state, the cool air around the heater core 1 is supplied into the compartment, thereby cooling the compartment. The air around the condenser 5 is released outside the vehicle.

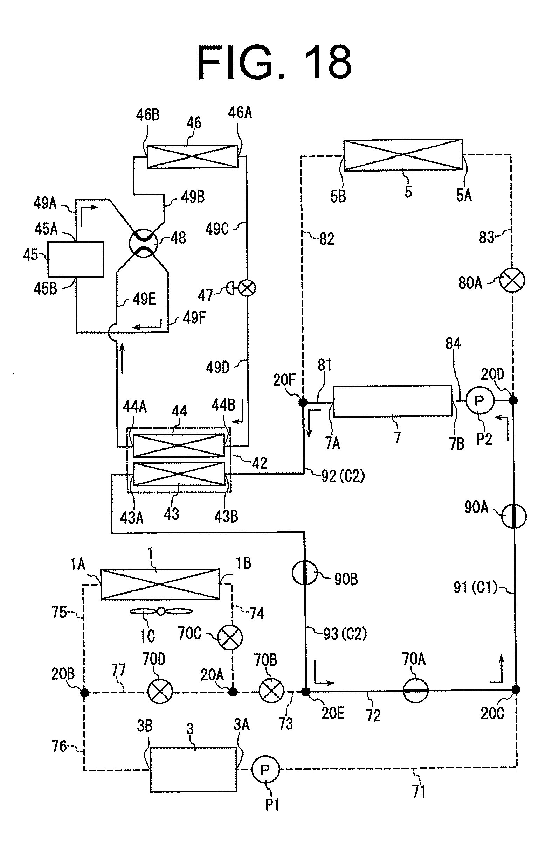

When the water temperature detected by the temperature sensor 27A exceeds a threshold value due to the heat generated by the vehicle system 7 when the vehicle is driven for a long time or to climb a hill, the control device 29 closes the valves 70B, 80A and opens the valves 90A, 90B. The out-vehicle circuit communicates with the connection circuit, as shown in FIG. 18, and, accordingly, water circulates between the out-vehicle circuit and the connection circuit through the tube 72. Specifically, the tube 91 communicates with the tubes 72, 84. The tube 92 communicates with the tube 81. The tube 93 communicates with the tube 72. Meanwhile, the tubes 72, 91 do not communicate with the tube 71. The tubes 81, 92 do not communicate with the tubes 82. The tubes 72, 93 do not communicate with the tube 73. In this state, the control device 29 stops the first pump P1, activates the compressor 45 and operates the four-way valve 48 so that a circulation circuit is made in which the refrigerant discharged from the outlet 45A of the compressor 45 flows to the evaporator 44 through the expansion valve 47, as indicated by solid arrow in FIG. 18.

In this case, heat transfers between the hot water in the connection circuit heat exchanger 43 and the cold refrigerant in the evaporator 44 in the refrigerant heat exchanger 42. Therefore, the water in the connection circuit heat exchanger 43 is cooled, thereby cooling the vehicle system 7. Thus, the load on the condenser 5 can be reduced.

Before restarting the vehicle in hot environment after the stop of the vehicle for a long time or after the cooling operation for a long time, the control device 29 is operated in the state shown in FIG. 18 thereby to open the valves 70B, 70C and close the valve 70A. Therefore, the in-vehicle circuit communicates with the out-vehicle circuit. In this case, the control device 29 activates at least one of the first and the second pumps P1, P2. Thus, the compartment can be cooled before the start-up of the vehicle by the negative heat of water cooled by negative heat of the refrigerant. Additionally, opening the valve 70D and closing the valve 70C by the control device 29, the negative heat can be stored in the heat storage medium.

Since the first pump P1 and the second pump P2 are provided in the in-vehicle circuit and the out-vehicle circuit, respectively, the heat exchange medium of each of the in-vehicle circuit and the out-vehicle circuit can be independently circulated through the respective circuits, regardless of whether or not the in-vehicle circuit communicates with the out-vehicle circuit. The flow direction and the flow rate of the heat exchange medium of the in-vehicle circuit and the out-vehicle circuit can be varied by the control device 29.

In the above-described vehicle air conditioner, water is heated or cooled by the refrigerant, as well as by the heat storage medium and the vehicle system 7. Efficient heating or cooling of the water makes possible lengthened air conditioning of the vehicle compartment. Additionally, storage of positive or negative heat for a long time in the heat storage medium is accomplished. Therefore, the frequency of using the heating device 31 and the cooling device 33 can be reduced. In the vehicle air conditioner of the seventh embodiment, the compressor 45 is operated by the regenerative electric power. Therefore, the vehicle air conditioning can save energy for operating the air conditioner while offering comfortable air conditioning of the vehicle compartment. Also, by warming and cooling the vehicle system 7 efficiently, storing of the heat in the vehicle can be prevented and the performance of the vehicle system 7 can be maintained. Furthermore, air conditioning of the compartment can be accomplished without using refrigerant compressed by the compressor 45. Thus, the frequency of using the compressor 45 can be reduced and, therefore, further energy-saving can be accomplished. The other advantageous effects of the vehicle air conditioner according to the seventh embodiment are the same as those in the second embodiment.

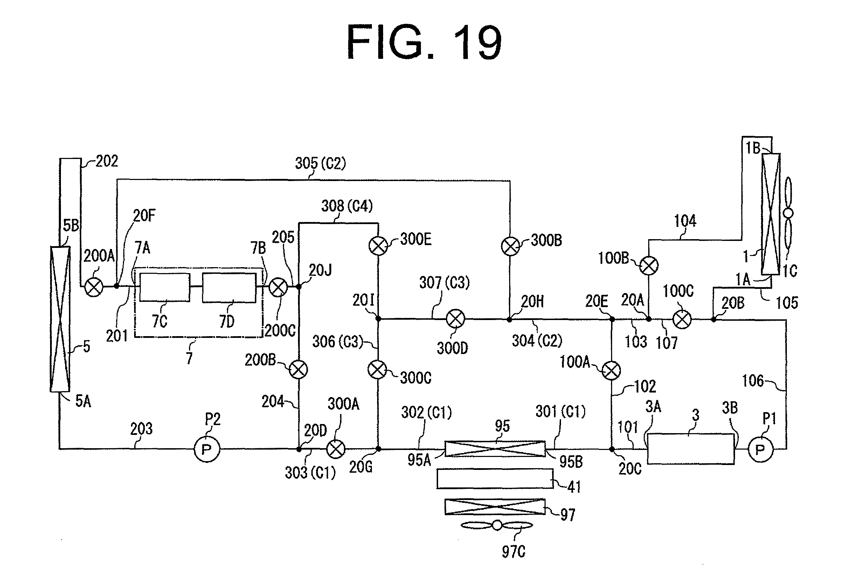

The vehicle air conditioner according to the eighth embodiment shown in FIG. 19 is made by modifying a part of the vehicle air conditioner according to the seventh embodiment. In the vehicle air conditioner, the refrigerant heat exchanger 42 and the refrigerant circulation circuit of the seventh embodiment are replaced by a peltier device 41, a first face heat exchanger 95 and a second face heat exchanger 97.

The heater core 1 is connected to the heat storage unit 3 through the tubes 101 through 107. The tube 101 connects the second outlet 3A of the heat storage unit 3 and the third connection point 20C. The tube 102 connects the third connection point 20C and the fifth connection point 20E. The tube 103 connects the fifth connection point 20E and the first connection point 20A. The tube 104 connects the first connection point 20A and the first inlet 1 B of the heater core 1. The tube 105 connects the first outlet 1A of the heater core 1 and the second connection point 20B. The tube 106 connects the second connection point 20B and the second inlet 3B. The tube 107 connects the first connection point 20A and the second connection point 20B. The tube 107 corresponds to a bypass circuit. The tubes 101 through 107 cooperate to form an in-vehicle circuit. The valves 100A, 100B, 100C are provided in the tubes 102, 104, 107, respectively. The first pump P1 is provided in the tube 106 for circulating water. The first pump P1 may be provided in the tube 101 or the tube 103. The valves 100A through 100C are connected to the control device 29 shown in FIG 1.

As shown in FIG. 19, the condenser 5 is connected to the vehicle system 7 through the tubes 201 through 205. The tube 201 connects the fourth outlet 7A of the vehicle system 7 and the sixth connection point 20F. The tube 202 connects the sixth connection point 20F and the third inlet 5B of the condenser 5. The tube 203 connects the third outlet 5A of the condenser and the fourth connection point 20D. The tube 204 connects the fourth connection point 20D and the tenth connection point 20J. The tube 205 connects the tenth connection point 20J and the fourth inlet 7B of the vehicle system 7. The tubes 201 through 205 cooperate to form an out-vehicle circuit. The valves 200A, 200B, 200C are provided in the tubes 202, 204, 205, respectively. The second pump P2 is provided in the tube 203 for circulating water. The second pump P2 may be provided in the tube 202. The temperature sensor 27A is provided in the tube 201. The valves 200A, 200B, 200C are connected to the control device 29 shown in FIG. 1.

As shown in FIG. 19, the vehicle system 7 of the vehicle air conditioner includes a motor 7C and an inverter 7D. The motor 7C functions as a generator during regenerative braking. The motor 7C and the vehicle system 7 may be replaced by a hybrid engine and a converter, respectively.

The first face heat exchanger 95 is provided on one side of the peltier device 41 and forms a part of the connection circuit. The first face heat exchanger 95 has a tenth outlet 95A through which water flows out and a tenth inlet 95B through which water flows in. The tenth outlet 95A may functions as the inlet and the tenth inlet 95B as the outlet when the direction of water flowing is reversed in the connection circuit.

The second face heat exchanger 97 is provided on the other side of the peltier device 41. A fan 97C is provided for the second face heat exchanger 97 for absorbing heat from outside and releasing heat of the second face heat exchanger 97 outside.

The peltier device 41 is operated from electric power supplied by a battery (not shown) that can be recharged with electric power generated by regenerative braking. The peltier device 41 is electrically connected to the control device 29. The direction of electric current that flows in the peltier device 41 can be reversed by the control device 29. The peltier device 41, the first face heat exchanger 95 and the second face heat exchanger 97 cooperate to form a first heat pump as a heat pump.

The connection circuit includes the first through fourth connection passages C1 through C4. The first connection passage C1 connects the third connection point 20C and the fourth connection point 20D. The second connection passage C2 connects the fifth connection point 20E and the sixth connection point 20F. The third connection passage C3 connects the seventh connection point 20G and the eighth connection point 20H. The fourth connection passage C4 connects the ninth connection point 201 and the tenth connection point 20J. The first face heat exchanger 95 is provided in the first connection passage C1.

The first connection passage C1 includes a tube 301 connecting the third connection point 20C and the tenth inlet 95B of the first face heat exchanger 95, a tube 302 connecting the tenth outlet 95A of the first face heat exchanger 95 and the seventh connection point 20G, and a tube 303 connecting the seventh connection point 20G and the fourth connection point 20D. The tube 301 communicates with the tubes 101, 102 at the third connection point 20C. The tube 302 communicates with the tubes 303, 306 at the seventh connection point 20G. The tube 303 communicates with the tubes 203, 204 at the fourth connection point 20D.

The second connection passage C2 includes a tube 304 connecting the fifth connection point 20E and the eighth connection point 20H and a tube 305 connecting the eighth connection point 20H and the sixth connection point 20F. The tube 304 communicates with the tubes 102, 103 at the third connection point 20C. The tube 305 communicates with the tubes 201, 202 at the sixth connection point 20F. The tubes 304, 305 communicate with the tube 307 at the eighth connection point 20H.

The third connection passage C3 includes a tube 306 connecting the seventh connection point 20G and the ninth connection point 20I and a tube 307 connecting the ninth connection point 20I and the eighth connection point 20H. The tubes 306, 307 communicate with the tube 308 at the ninth connection point 20I.

The fourth connection passage C4 includes a tube 308 connecting the ninth connection point 20I and the tenth connection point 20J. The tube 308 communicates with the tubes 204, 205 at the tenth connection point 20J.

Valves 300A through 300E are provided in the tubes 303, 305, 306, 307, 308, respectively. The valves 300A through 300E are connected to the control device 29. The other elements or components are the same as those in the seventh embodiment. The following description will use the same reference numerals for the common elements or components in the seventh and the eighth embodiments, and the description of such elements or components will be omitted.

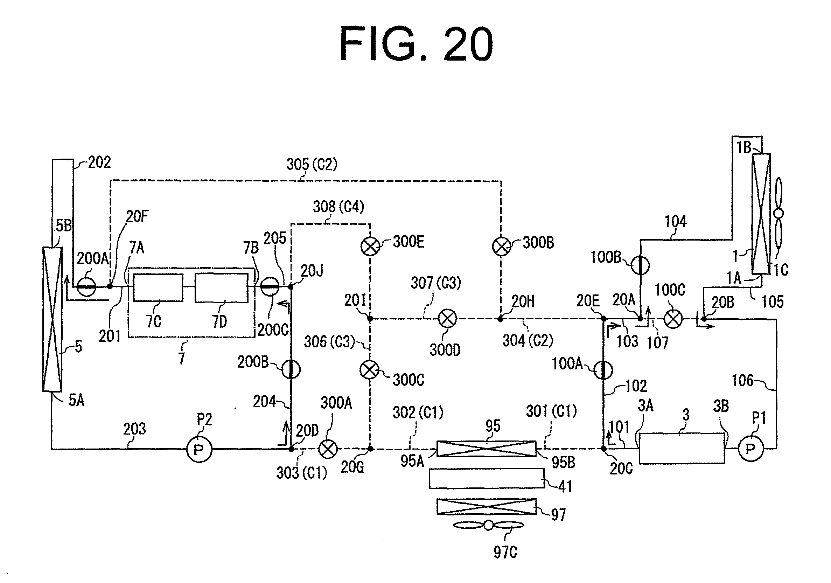

In the vehicle air conditioner, when the water temperature detected by the temperature sensor 27A is below a threshold value during the heating mode operation in cold environment, the control device 29 opens the valves 100A, 100B, 200A through 200C and, closes the valves 100C, 300A through 300E. As a result, the in-vehicle circuit does not communicate with the out-vehicle circuit, as shown in FIG. 20. Specifically, the tubes 101 through 106 communicate with each other and the tubes 201 through 205 also communicate with each other. The tubes 101, 102 do not communicate with the tube 301. The tubes 102, 103 do not communicate with the tube 304. The tubes 203, 204 do not communicate with the tube 303. The tubes 201, 202 do not communicate with the tube 305. The tubes 204, 205 do not communicate with the tube 308. In this state, the control device 29 operates the first and the second pumps P1, P2. Therefore, the warm air around the heater core 1 is supplied into the compartment, thereby warming the compartment. The air around the condenser 5 is released outside the vehicle.

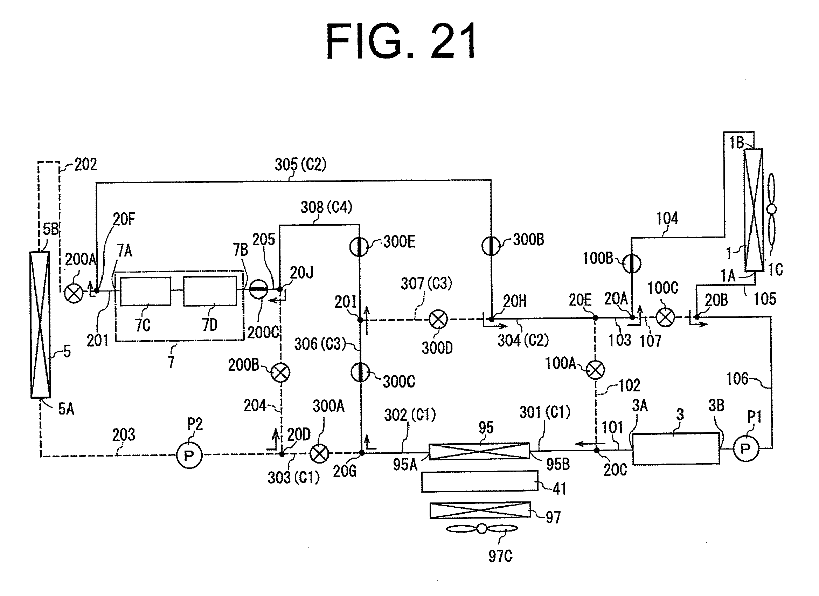

On the other hand, when the water temperature detected by the temperature sensor 27A exceeds the threshold value, the control device 29 opens the valves 100B, 200C, 300B, 300C and closes the valves 100A, 100C, 200A, 200B, 300A, 300D. Therefore, the in-vehicle circuit communicates with the out-vehicle circuit, as shown in FIG. 21. Specifically, the tube 301 communicates with the tube 101. The tube 302 communicates with the tube 306. The tube 304 communicates with the tubes 103, 305. The tubes 103 through 106 communicate with each other. The tube 305 communicates with the tube 201. The tube 308 communicates with the tubes 306, 205. The tube 101 does not communicate with the tube 102. The tube 302 does not communicate with the tube 303. The tube 306 does not communicate with the tube 307. In this state, the control device 29 stops the operation of the second pump P2 and the exhaust heat of the vehicle system 7 is supplied into the compartment by the heater core 1.

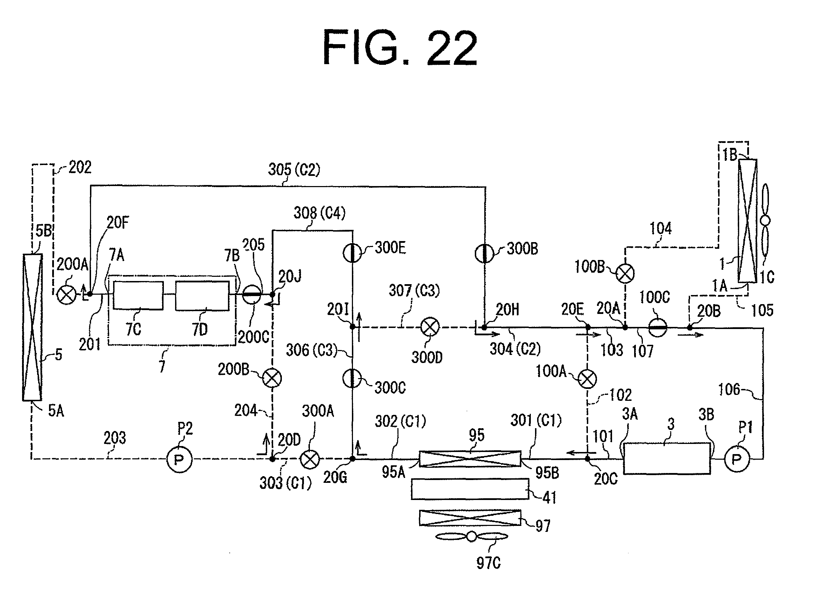

The circulation circuit of FIG. 21 is changed to the circulation circuit shown n FIG. 22 when the valve 100C is opened and the valve 100B is closed. In this case, the tube 107 communicates with the tubes 103, 105. The tube 103 does not communicate with the tube 104. The tube 105 does not communicate with the tube 106. In this state, hot water flows through the tube 107, bypassing the heater core 1, as shown in FIG. 22. The tube 107 corresponds to a by-pass circuit. Therefore, the exhaust heat of the vehicle system 7 is not used for warming the compartment, but it can be stored in the heat storage medium as the positive heat. Furthermore, when the control device 29 opens the valves 100B, 100C, a part of the exhaust heat of the vehicle system 7 is supplied into the compartment by the heater core 1 and another part of the exhaust heat can be stored in the heat storage medium.

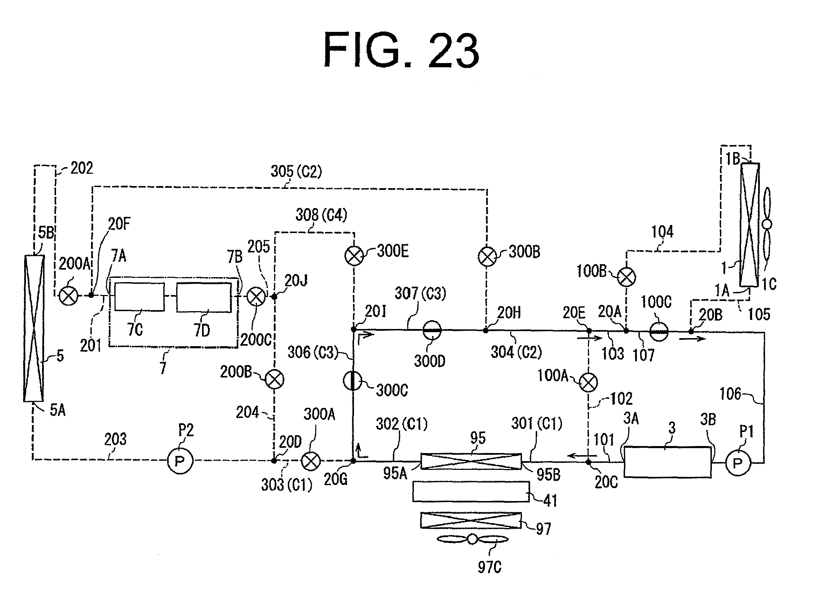

In restarting the vehicle in cold environment after the stop of the vehicle for a long time or after warming the compartment for a long time, the control device 29 opens the valves 100C, 300C, 300D and closes the valves 100A, 100B, 200A, 200B, 200C, 300A, 300B, 300E. Therefore, the in-vehicle circuit communicates with the connection circuit and the out-vehicle circuit does not communicate with the connection circuit, as shown in FIG. 23. Specifically, the tube 301 communicates with the tube 101. The tube 302 communicates with the tube 306. The tube 304 communicates with the tubes 103, 307. The tube 107 communicates with the tubes 103, 106. The tube 101 does not communicate with the tube 102. The tube 103 does not communicate with the tube 104. The tube 105 does not communicate with the tube 106. The tube 302 does not communicate with the tube 303. The tube 306 does not communicate with the tube 308. The tube 304 does not communicate with the tube 305. In this state, the control device 29 causes the peltier device 41 to be operated from the electric power supplied by the chargeable battery. In this case, the control device 29 controls the direction of electric current flowing in the peltier device 41 so that heat is released from the first face heat exchanger 95 side of the peltier device 41. The control device 29 also activates the first pump P1.

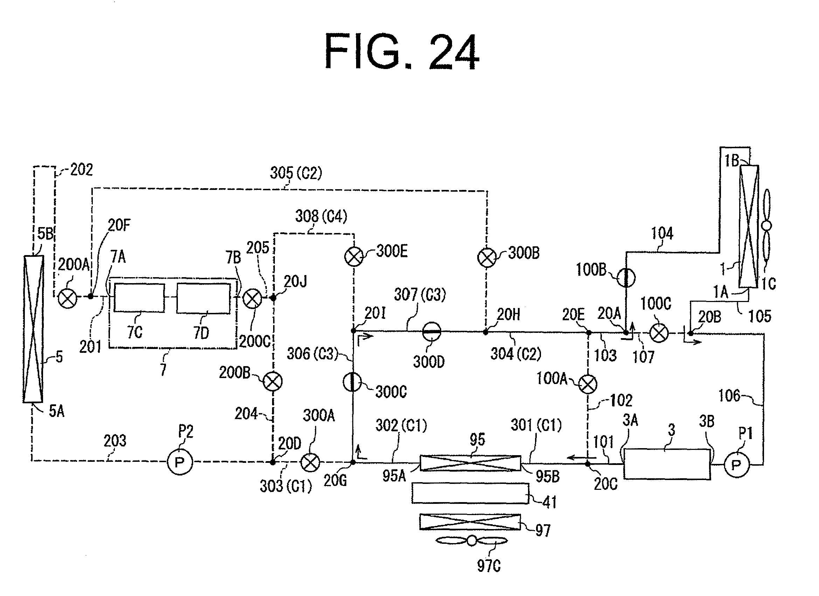

In this state, positive heat can be stored in the heat storage medium by the water heated in the first face heat exchanger 95 before the start-up of the vehicle. Then opening the valve 100B and closing the valve 100C, the circulation circuit shown in FIG. 24 is formed, wherein the compartment can be warmed by the water heated in the first face heat exchanger 95 before the start-up of the vehicle.

In the state shown in FIG. 24, when the control device 29 opens the valves 200C, 300B, 300E and closes the valve 300D, the circulation circuit same as the aforementioned circulation circuit shown in FIG. 21 is formed and the in-vehicle circuit communicates with the out-vehicle circuit. In this state, the compartment and the vehicle system 7 can be warmed by the water heated in the first face heat exchanger 95 before the start-up of the vehicle. Therefore, the reduction in output power of the vehicle system 7 at a start-up of the vehicle in cold environment can be prevented.

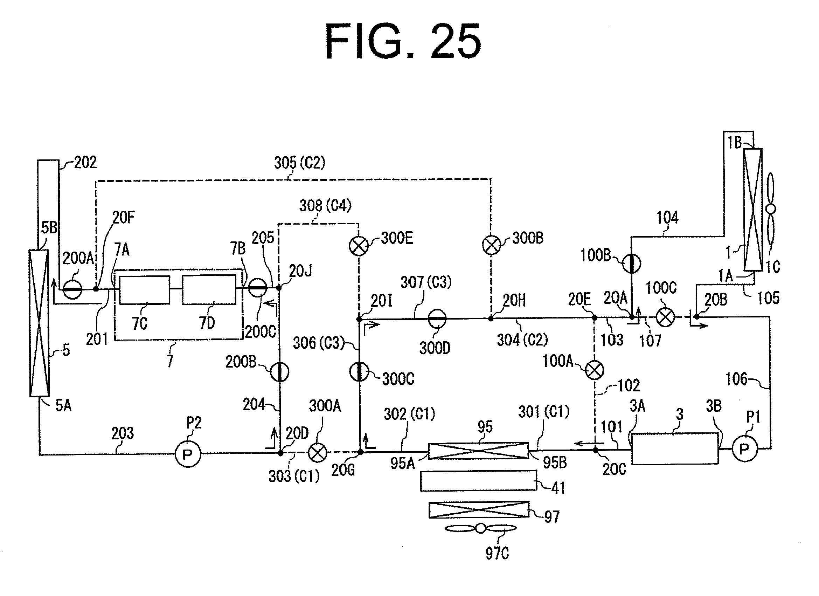

When the control device 29 opens the valves 100B, 200A through 200C, 300C, 300D and closes the valves 100A, 100C, 300A, 300B, 300E, the in-vehicle circuit communicates with the connection circuit and the out-vehicle circuit does not communicate with the connection circuit, as shown in FIG. 25. Specifically, the tubes 201 through 205 communicate with each other. The tube 301 communicates with the tube 101. The tube 302 communicates with the tubes 306. The tube 306 communicates with the tubes 307. The tube 304 communicates with the tubes 103, 307. The tubes 103 through 106 communicate with each other. The tube 101 does not communicate with the tube 102. The tube 107 does not communicate with the tubes 103, 106. The tube 302 does not communicate with the tube 303. The tube 304 does not communicate with the tube 305. The tube 306 does not communicate with the tube 308. In this state, the control device 29 activates the first and the second pumps P1, P2 and also operates the peltier device 41 so that heat is released form the first face heat exchanger 95 side of the peltier device 41.

In this state of the vehicle air conditioner, the compartment can be warmed by the heat from the regenerative electric power while the vehicle is driving. That is, when the positive heat stored in the heat storage medium and the exhaust heat of the vehicle system 7 are both small, the compartment can be warmed sufficiently by using the heat of the water that was heated in the first face heat exchanger 95. In this state, since the peltier device 41 is operated by the regenerative electric power exceeding the charging capacity of the battery, further energy saving can be achieved. When the control device 29 opens the valve 100C and closes the valve 100B, positive heat can be stored in the heat storage medium by the surplus regenerative electric power.

In the cooling mode operation of the vehicle air conditioner in hot environment, the control device 29 opens the valves 100A, 100B, 200A through 200C, closes the valves 100C, 300A through 300E and operates the first and the second pumps P1, P2. By so doing, the aforementioned circulation circuit shown in FIG. 20 is formed and the in-vehicle circuit does not communicate with the out-vehicle circuit. Therefore, the cold air around the heater core 1 is supplied into the compartment, thereby cooling the compartment. The air around the condenser 5 is released outside the vehicle.

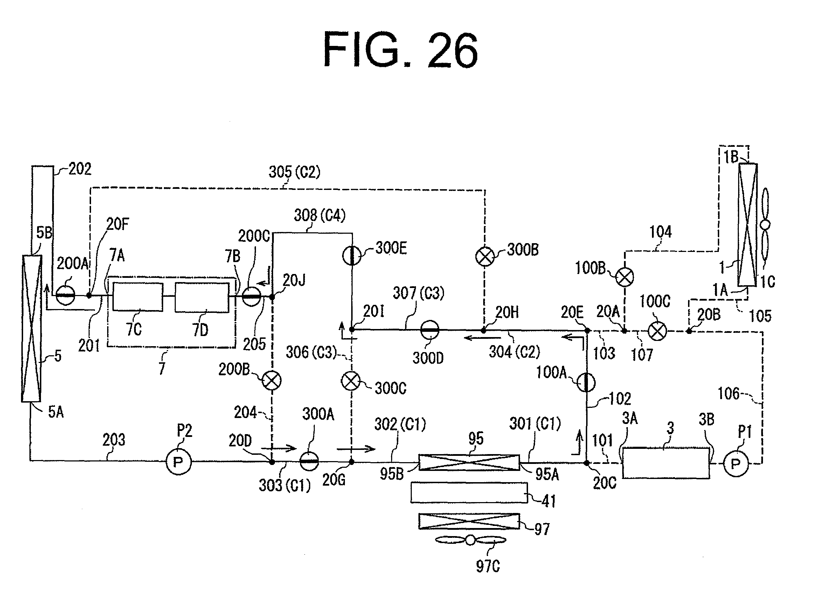

When the temperature of the exhaust heat of the vehicle system 7 exceeds a threshold value while the vehicle is driving in hot environment, the control device 29 opens the valves 100A, 200A, 200C, 300A, 300D, 300E and closes the valves 100B, 100C, 200B, 300B, 300C. Therefore, as shown in FIG. 26, the out-vehicle circuit communicates with the connection circuit and water circulates through the tube 102 between the connection circuit and the out-vehicle circuit. Specifically, the tube 102 communicates with the tubes 301, 304. The tube 307 communicates with the tubes 304, 308. The tube 308 communicates with the tubes 205. The tube 201 communicates with the tube 202. The tube 303 communicates with the tubes 203, 302. The tube 102 does not communicate with the tube 101, 103. The tube 304 does not communicate with the tube 305. The tube 203 does not communicate with the tube 204. The tube 302 does not communicate with the tube 306. In this state, the control device 29 operates the peltier device 41 so that the heat on the first face heat exchanger 95 side of the peltier device 41 is absorbed and also stops the operation of the first pump P1.

In this state, the exhaust heat is released outside the vehicle by the condenser 5 and simultaneously absorbed in the first face heat exchanger 95. Therefore, the vehicle system 7 can be cooled efficiently by cold water without increasing the load on the condenser 5 in hot environment. The exhaust heat absorbed in the first face heat exchanger 95 is released outside the vehicle by the fan 97C provided in the second face heat exchanger 97.

In starting the vehicle in hot environment after the vehicle is stopped for a long time or after cooling the compartment for a long time, the control device 29 opens the valves 100C, 300C, 300D and closes the valves 100A, 100B, 200A through 200C, 300A, 300B, 300E. By so doing, the aforementioned circulation circuit shown in FIG 23 is formed. Then, the in-vehicle circuit communicates with the connection circuit and the out-vehicle circuit does not communicate with the connection circuit. In this state, the control device 29 causes the peltier device 41 to be operated from the electric power supplied from the chargeable battery. In this case, the control device 29 operates the peltier device 41 so that the heat on the first face heat exchanger 95 side of the peltier device 41 is absorbed and also operates the first pump P1.

In this state, negative heat can be stored in the heat storage medium by the water cooled in the first face heat exchanger 95 before the start-up of the vehicle. The circulation circuit shown in FIG. 24 is formed by opening the valve 100B and closing the valve 100C. Therefore, the compartment can be cooled by the water cooled in the first face heat exchanger 95 before the start-up of the vehicle.

Opening the valves 100B, 200A through 200C, 300C, 300D and closing the valves 100A, 100C, 300A, 300B, 300E while the vehicle is driving in hot environment, the aforementioned circulation circuit shown in FIG. 25 is formed in which the in-vehicle circuit communicates with the connection circuit and the out-vehicle circuit does not communicate with the connection circuit. The control device 29 operates the peltier device 41 so that the heat on the first face heat exchanger 95 side of the peltier device 41 is absorbed. Therefore, the compartment can be cooled by the regenerative electric power while the vehicle is driving in hot environment. In other words, when negative heat stored in the heat storage medium is small, the compartment can be cooled sufficiently by the negative heat of the water cooled in the first face heat exchanger 95. In this state, since the peltier device 41 is operated by the regenerative electric power, further energy saving can be obtained. When the control device 29 opens the valve 100C and closes the valve 100B, negative heat can be stored in the heat storage medium by the surplus regenerative electric power.

In the vehicle air conditioner according to the above-described embodiment, the water in the first face heat exchanger 95 can be heated or cooled when the peltier device 41 releases heat to the first face heat exchanger 95 or absorbs heat from the first face heat exchanger 95. The water can be heated or cooled by forming an appropriate circulation circuit, specifically by changing the connection among the tubes 101 through 107, 201 through 205 and 301 through 307 in accordance with the requirement. Thus, the air conditioning of the compartment and heating and cooling of the vehicle system 7 are performed efficiently, thereby attaining the comfortable air conditioning of the compartment while maintaining the operating performance of the vehicle system 7.

In the vehicle air conditioner according to the embodiment, the peltier device 41 is operated by the regenerative electric power. Therefore, the air conditioning of the compartment by heating or cooling the water and the maintenance of the operating performance of the vehicle system 7 can be accomplished while saving energy. The use of the peltier device 41 simplifies the structure of the vehicle air conditioner, thereby facilitating the installation of the vehicle air conditioner and reducing the manufacturing cost. The other advantageous effects are the same as those of the seventh embodiment.

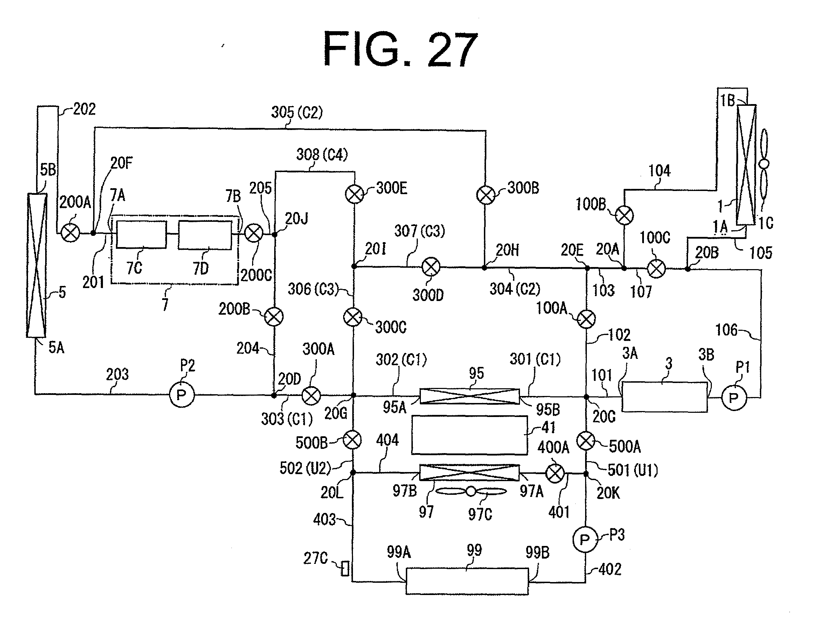

The vehicle air conditioner according to the ninth embodiment shown in FIG. 27 is made by adding a battery 99, a battery circulation circuit and a joint circuit to the vehicle air conditioner according to the eighth embodiment.

The second face heat exchanger 97 of the vehicle air conditioner has a fifth outlet 97A through which water flows out and a fifth inlet 97B through which water flows in.

The battery 99 has a sixth outlet 99A through which water flows out and a sixth inlet 99B through which water flows in. The battery can be charged with regenerative electric power generated by the motor 7C during regenerative braking. A fan may be provided for the battery 99 for releasing heat.

The second face heat exchanger 97 is connected to the battery 99 through the tubes 401 through 404. The tube 401 connects the fifth outlet 97A of the second face heat exchanger 97 and eleventh connection point 20K. The tube 402 connects the eleventh connection point 20K and the sixth inlet 99B of the battery 99. The tube 403 connects the sixth outlet 99A of the battery and twelfth connection point 20L. The tube 404 connects the twelfth connection point 20L and the fifth inlet 97B of the second face heat exchanger 97. The tubes 401 through 404 form the battery circulation circuit. A valve 400A is provided in the tube 401. Alternatively, the valve 400A may be provided in the tube 404. A third pump P3 is provided in the tube 402 for circulating water. Alternatively, the third pump P3 may be provided in the tube 403. A temperature sensor 27C is provided in the tube 403 for detecting temperature of water flowing through the tube 403. The valve 400A, the third pump P3 and the temperature sensor 27C are connected to the control device 29 shown in FIG. 1.

As shown in FIG. 27, the vehicle air conditioner includes a first joint passage U1 and a second joint passage U2 forming the joint circuit. The first joint passage U1 is formed by a tube 501 connecting the third connection point 20C and the eleventh connection point 20K. The tube 501 communicates with the tubes 101, 102, 301 at the third connection point 20C and with the tubes 401, 402 at the eleventh connection point 20K. The second joint passage U2 is formed by a tube 502 connecting the seventh connection point 20G and twelfth connection point 20L. The tube 502 communicates with the tubes 302, 303, 306 at the seventh connection point 20G and with the tubes 403, 404 at the twelfth connection point 20L. Valves 500A, 500B are provided in the tubes 501, 502, respectively. The valves 500A, 500B are connected to the control device 29 shown in FIG. 1.

The peltier device 41 is connected to the battery 99. The peltier device 41 is controlled by the control device 29 so as to generate the temperature difference of about 40° C between the heat absorbing side and the heat releasing side. The other elements or components are the same as those in the eighth embodiment. The following description will use the same reference numerals for the common elements or components in the eighth and the ninth embodiments, and the description of such elements or components will be omitted.

The vehicle air conditioner according to the ninth embodiment is made by adding the following passages to the passages in the vehicle air conditioner according to the eighth embodiment.

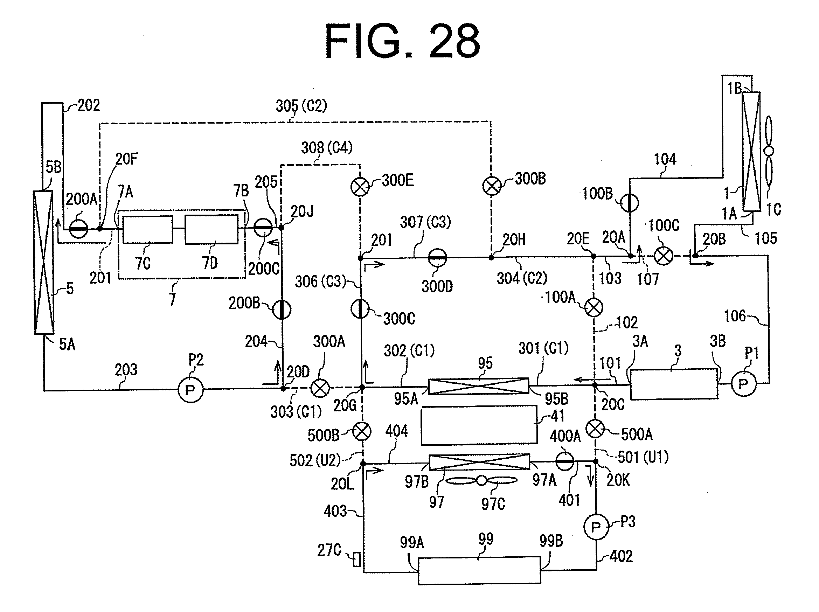

In the vehicle air conditioner, when the water temperature detected by the temperature sensor 27A is below a threshold value during the heating mode operation in cold environment, the control device 29 opens the valves 100B, 200A through 200C, 300C, 300D, 400A and closes the valves 100A, 100C, 300A, 300B, 300E, 500A, 500B. Therefore, the in-vehicle circuit communicates with the connection circuit and the connection circuit does not communicate with the out-vehicle circuit and the battery circulation circuit, as shown in FIG 28. Specifically, the tube 301 communicates with the tube 101. The tube 302 communicates with the tube 306. The tube 307 communicates with the tube 306, 304. The tube 304 communicates with the tube 103. The tubes 103 through 106 communicate with each other. The tubes 201 through 205 communicate with each other. The tubes 401 through 404 communicate with each other. The tube 102 does not communicate with the tubes 101, 103. The tube 107 does not communicate with the tubes 103, 106. The tube 303 does not communicate with the tube 203. The tube 304 does not communicate with the tube 305. The tube 306 does not communicate with the tube 308. The tube 501 does not communicate with the tubes 101, 102, 301. The tube 502 does not communicate with the tubes 302, 303, 306. In this state, the control device 29 operates the first and the second pumps P1, P2.

In this state, the warm air around the heater core 1 is supplied into the compartment, thereby warming the compartment. The air around the condenser 5 is released outside the vehicle. When the water temperature detected by the temperature sensor 27A exceeds the threshold value due to the heat generated by the battery 99, the control device 29 operates the peltier device 41 so that the heat on the second face heat exchanger 97 side of the peltier device 41 is absorbed. The control device 29 also activates the third pump P3. Therefore, the battery 99 generating heat while the vehicle is driving can be cooled. Battery deterioration which is caused by heat generated by the battery being charged rapidly or charged with regenerative electric power while the vehicle is driving can be prevented.

In the state of FIG. 28, the compartment can be warmed by the heat that the peltier device 41 absorbs from the battery 99. Also, positive heat can be stored in the heat storage medium when the control device 29 opens the valve 100C and closes the valve 100B.

In cold environment, the load in cooling the battery 99 decreases. For this reason, the temperatures of the peltier device 41 on the heat absorbing side and on the heat releasing side are set to, for example, 15°C and 55°C, respectively, by the control device 29. The control device 29 also controls the operation of the third pump P3 in such a way that the flow rate of water flowing in the battery circulation circuit is increased so as to restrict the temperature rise of the battery 99. Thus, the compartment can be warmed to a higher temperature and higher positive heat can be stored in the heat storage medium. Based on the water temperature detected by the temperature sensor 27C, the control device 29 adjusts the temperature of the peltier device 41 on the heat absorbing side and also the flow rate of the water generated by the third pump P3 so as to prevent overloading of the battery 99.

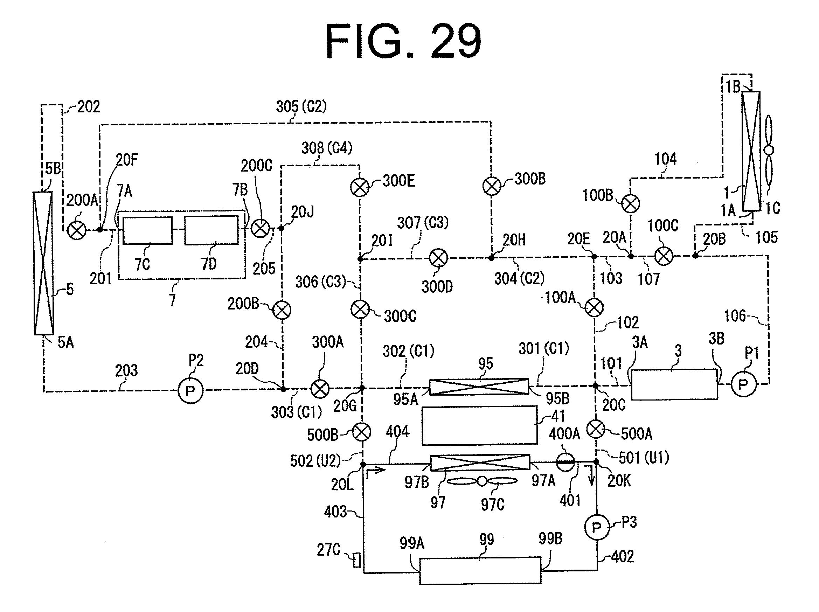

When the vehicle is started after being stopping for a long time in cold environment, the voltage of the battery 99 is dropped and the operating performance of the vehicle may deteriorate temporarily. For this reason, in the vehicle air conditioner, the control device 29 opens the valve 400A and closes the valves 500A, 500B before a start-up of the vehicle. The control device29 also activates the third pump P3. Thus, water circulates only in the battery circulation circuit, as shown in FIG. 29. The control device 29 operates the peltier device 41 so that the heat on the second face heat exchanger 97 side of the peltier device 41 is released. The temperature of the battery 99 can be raised before a start-up of the vehicle by the water heated by the peltier device 41. Therefore, the performance deterioration which may occur immediately after a start-up of the vehicle can be prevented.

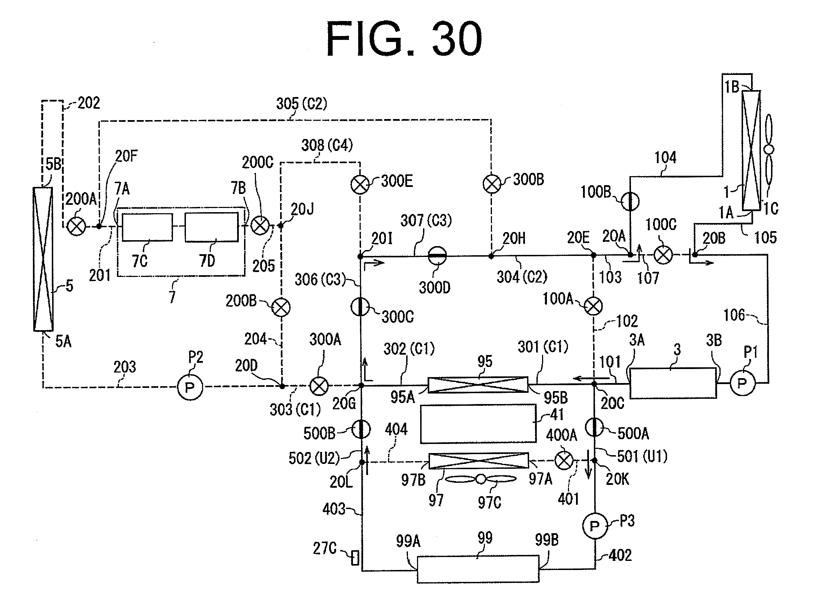

In this state of the vehicle air conditioner, the control device 29 opens the valves 100B, 300C, 300D, 500A, 500B and closes the valves 100A, 100C, 300A, 300B, 300E, 400A. Therefore, the in-vehicle circuit communicates with the connection circuit and the battery circulation circuit, as shown in FIG. 30. The out-vehicle circuit does not communicate with the connection circuit. Specifically, the tube 301 communicates with the tubes 101, 501. The tube 302 communicates with the tubes 306, 502. The tube 304 communicates with the tubes 307, 103. The tube 306 communicates with the tube 307. The tubes 103 through 106 communicate with each other. The tube 402 communicates with the tube 501. The tube 403 communicates with the tube 501. The tube 102 does not communicate with the tubes 101, 103. The tube 107 does not communicate with the tubes 103, 106. The tube 302 does not communicate with the tube 303. The tube 304 does not communicate with the tube 305. The tube 306 does not communicate with the tube 308. The tube 401 does not communicate with the tubes 402, 403.

In this case, the temperature of the battery 99 can be raised before a start-up of the vehicle by the positive heat stored in the heat storage medium. The compartment can be warmed before a start-up of the vehicle by the positive heat stored in the heat storage medium. This may be accomplished as long as at least one of the first and the third pumps P1, P3 operates.

In this case, the control device 29 can also operate the peltier device 41 so that the heat on the first face heat exchanger 95 side of the peltier device 41 is released. The water heated by the peltier device 41 may be used for raising the temperature of the battery 99 and also for warming the compartment. Additionally, opening the valve 100C and closing the valve 100B, positive heat can be stored in the heat storage medium. The heat for transferring heat is absorbed from outside the vehicle by the fan 97C of the second face heat exchanger 97.

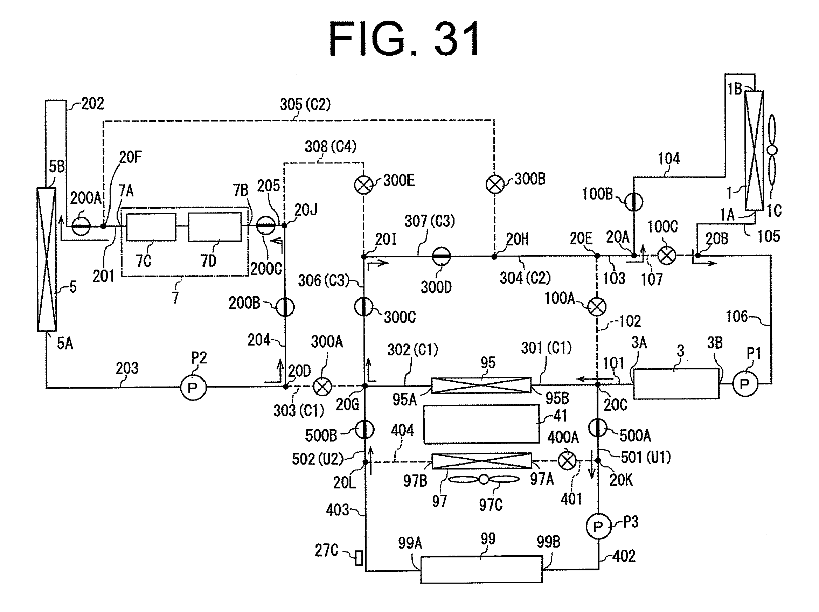

During the cooling mode operation of the vehicle air conditioner in hot environment, when the water temperature detected by the temperature sensor 27A is below a threshold value and temperature of water detected by the temperature sensor 27C exceeds a threshold value, a circulation circuit as shown in FIG. 31 is formed. In this state, the control device 29 opens the valves 100B, 200A through 200C, 300C, 300D, 500A, 500B and closes the valves 100A, 100C, 300A, 300B, 300E, 400A. The control device 29 also activates the first through the third pumps P1 through P3. The control device 29 may activate at least one of the first and third pumps P1, P3.

In this state, the in-vehicle circuit communicates with the connection circuit and the battery circulation circuit and the out-vehicle circuit does not communicate with the connection circuit. Since the tubes 201 through 205 communicate with each other, water circulates through the out-vehicle circuit. Therefore, the air around the condenser 5 is sent outside the vehicle, so that the heat in the vehicle is prevented from being stored. The cold air around the heater core 1 is supplied into the compartment, thereby cooling the compartment. Furthermore, the battery 99 can be cooled by the negative heat stored in the heat storage medium. Thus, battery deterioration due to the heat generated by the battery while the vehicle is driving may be prevented.

Meanwhile, the control device 29 can operate the peltier device 41 so that the heat on the first face heat exchanger 95 side of the peltier device 41 is absorbed. In this case, the compartment can be cooled by the water whose heat is absorbed by the peltier device 41. Heat generated by the peltier device 41 is released outside the vehicle by the fan 97C of the second face heat exchanger 97.

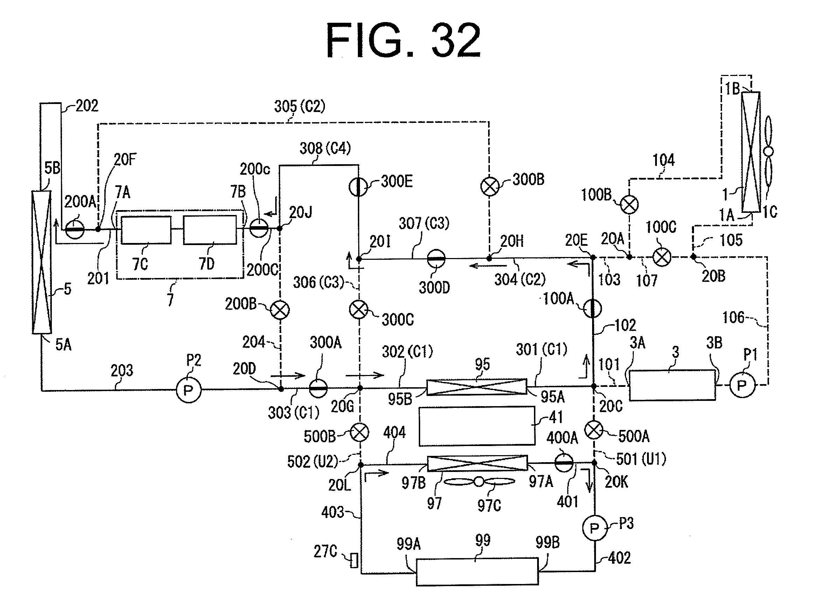

In hot environment, a circulation circuit as shown in FIG. 32 can be also formed. In this state, the control device 29 opens the valves 100A, 200A, 200C, 300A, 300D, 300E, 400A and closes the valves 100B, 100C, 200B, 300B, 300C, 500A, 500B. The control device 29 also activates the second and the third pumps P2, P3. The control device 29 operates the peltier device 41 so that the heat on the second face heat exchanger 97 side of the peltier device 41 is absorbed.

In the state of FIG. 32, the out-vehicle circuit communicates with the connection circuit and, therefore, water circulates through the out-vehicle circuit, the connection circuit and the tube 102. The connection circuit does not communicate with the battery circulation circuit. Specifically, the tube 102 communicates with the tubes 301, 304. The tube 307 communicates with the tubes 304, 308. The tube 308 communicates with the tube 205. The tube 201 communicates with the tube 202. The tube 303 communicates with the tubes 203, 302. The tubes 401 through 404 communicate with each other. The tube 102 does not communicate with the tubes 101, 103. The tube 305 does not communicate with the tubes 304, 201. The tube 203 does not communicate with the tube 204. The tube 302 does not communicate with the tube 306. The tube 501 does not communicate with the tubes 301, 102, 402. The tube 502 does not communicate with the tubes 302, 306, 403.

In this state of fluid communication, heat generated by the battery 99 is absorbed in the second face heat exchanger 97 by the peltier device 41 and released to the water in the first face heat exchanger 95. That heat released from the battery 99 is further released outside the vehicle by the condenser 5. Therefore, the battery 99 which is charged rapidly in hot environment and generates heat of high temperature can be cooled efficiently. Thus, the deterioration of the battery 99 due to the heat can be prevented.

In this state, the control device 29 closes the valve 400A and stops the third pump P3. The control device 29 also operates the peltier device 41 so that the heat on the first face heat exchanger 95 side of the peltier device 41 is absorbed. By so doing, the same advantageous effect as that of the circulation circuit shown in FIG. 26 is obtained in a way that the vehicle system 7 is cooled by water whose heat is absorbed by the peltier device 41. This effect is suitable when there is still room for cooling the battery 99 in hot environment.

In the vehicle air conditioner, the battery 99 can be warmed or cooled by the peltier device 41 in addition to the heat stored in the heat storage medium and the exhaust heat of the vehicle system 7. Therefore, the performance deterioration of the battery 99 due to the temperature change can be prevented effectively. Furthermore, the compartment can be also warmed by the heat generated by the battery 99 and the positive heat can be stored in the heat storage medium. Thus, highly energy-saving air conditioning of the compartment can be achieved. The other advantageous effects are the same as those of the eighth embodiment.

The present invention has been described with reference to the first through the ninth embodiments. The present invention is not limited to these embodiments, but may be modified within the scope of the appended claims.

For example, the desiccant type dehumidifier 50 may be added to the vehicle air conditioners according to the second, fourth, seventh, eighth and ninth embodiments. Any other heat exchanger may be added to the desiccant type dehumidifier 50.

In the seventh through the ninth embodiments, it is possible to distinguish between air conditioning of the compartment and storing heat in the heat storage medium without the bypass circuits 77, 107 and the valves 100B, 100C, depending on whether the fan 1C provided in the heater core 1 is operated or not.

The evaporator 44 in the seventh embodiment may be provided with a switching circuit for switching between exchanging heat with water in the connection circuit heat exchanger 43 and air-conditioning the compartment directly by the heat of the refrigerant in the evaporator 44.

The refrigerant heat exchanger 42 in the seventh embodiment may be modified in such a way that the peltier device 41 is provided between the connection circuit heat exchanger 43 and the evaporator 44 thereby for transferring heat therebetween. In this case, the water in the second connection passage C2 may be directly heated or cooled without using the connection circuit heat exchanger 43.

The battery 99 in the ninth embodiment may be connected to the heating device 31 and the cooling device 33. In this case, energy-saving air conditioning of the compartment for a long time can be achieved by operating the heating device 31 and the cooling device 33 by the regenerative electric power.

The present invention can be used for vehicle air conditioning.

A vehicle air conditioner includes a first heat exchanger, wherein air around the first heat exchanger is supplied into a vehicle compartment, a heat storage unit, an in-vehicle circuit that connects between the first heat exchanger and the heat storage unit, a second heat exchanger, wherein air around the second heat exchanger is sent outside a vehicle, a vehicle system, wherein the vehicle system generates exhaust heat, an out-vehicle circuit, a connection circuit that connects between the in-vehicle and the out-vehicle circuits, a plurality of valves operating so that the in-vehicle circuit and the out-vehicle circuit are connected or disconnected from each other through the connection circuit and a control device for controlling states of the valves.

## Claims

1. A vehicle air conditioner comprising:
a first heat exchanger (1) including a first outlet (1A) through which heat exchange medium flows out and a first inlet (1B) through which the heat exchange medium flows in, wherein air around the first heat exchanger is supplied into a vehicle compartment;
a heat storage unit (3) including a second outlet (3A) through which the heat exchange medium flows out, a second inlet (3B) through which the heat exchange medium flows in and a heat storage medium, wherein the heat storage unit is operable to exchange heat between the heat storage medium and the heat exchange medium;
an in-vehicle circuit (11-14, 13A, 71-77, 101-107) that connects between the first outlet and the second inlet and connects between the second outlet and the first inlet;
a second heat exchanger (5) including a third outlet (5A) through which the heat exchange medium flows out and a third inlet (5B) through which the heat exchange medium flows in, wherein air around the second heat exchanger is sent outside a vehicle;
a vehicle system (7) including a fourth outlet (7A) through which the heat exchange medium flows out and a fourth inlet (7B) through which the heat exchange medium flows in, wherein the vehicle system generates exhaust heat; and
an out-vehicle circuit (15-18, 15A, 18A, 81-84, 201-205) that connects between the third outlet and the fourth inlet and connects between the fourth outlet and the third inlet, **characterized in that** the vehicle air conditioner further comprising:
a connection circuit (19,21, 19A, 21A, 91-93, 301-308) that connects between the in-vehicle and the out-vehicle circuits;
a plurality of valves (23, 25, 24A, 24B, 26A, 26B, 70A-70D, 80A, 90A, 90B, 100A-100C, 200A-200C, 300A-300E, 400A, 500A, 500B) operating so that the in-vehicle circuit and the out-vehicle circuit are connected or disconnected from each other through the connection circuit; and
a control device (29) for controlling states of the valves.

2. The vehicle air conditioner according to claim 1, **characterized in that** the vehicle air conditioner further comprising:
a first heat pump (41, 42, 43, 44, 45, 46, 47, 95, 97) provided in the connection circuit for transferring heat between the heat exchange medium in the connection circuit and outside the connection circuit.

3. The vehicle air conditioner according to claim 2, **characterized in that** the first heat pump includes:
a refrigerant heat exchanger (42) for exchanging heat between the heat exchange medium and refrigerant, wherein the refrigerant heat exchanger has an evaporator (44);
a compressor (45);
a condenser (46); and
an expansion valve (47), wherein the evaporator, the compressor, the condenser and the expansion valve cooperate to form a refrigerant circulation circuit, preferably the refrigerant circulation circuit includes:
a selection valve (48) for selecting a circulation of the refrigerant discharged from the compressor either through the condenser, the expansion valve and the evaporator in this order or through the evaporator, the expansion valve and the condenser in this order.

4. The vehicle air conditioner according to claim 2, **characterized in that** the first heat pump including:
a peltier device (41);
a first face heat exchanger (95) provided on one side of the peltier device and forming a part of the connection circuit; and
a second face heat exchanger (97) provided on the other side of the peltier device.

5. The vehicle air conditioner according to any one of claims 1 through 4, **characterized in that** the in-vehicle circuit including:
a bypass circuit (77, 107) communicating with the in-vehicle circuit at a first connection point (20A) between the first inlet and the second outlet and a second connection point (20B) between the first outlet and the second inlet, bypassing the first heat exchanger, preferably the connection circuit includes:
a first connection passage (C1) communicating with the in-vehicle circuit at third connection point (20C) between the first inlet and the second outlet and communicating with the out-vehicle circuit at fourth connection point (20D) between the third outlet and the fourth inlet;
a second connection passage (C2) communicating with the in-vehicle circuit at fifth connection point (20E) between the first inlet and the second outlet and communicating with the out-vehicle circuit at sixth connection point (20F) between the third inlet and the fourth outlet;
a third connection passage (C3) communicating with the first connection passage at seventh connection point (20G) which is connected to the first connection passage and communicating with the second connection passage at eighth connection point (20H) which is connected to the second connection passage; and
a fourth connection passage (C4) communicating with the third connection passage at ninth connection point (201) which is connected to the third connection passage and communicating with the out-vehicle circuit at tenth connection point (20J) between the third outlet and the fourth inlet, more preferably one of the valves (100A, 100B, 100C) is provided in the bypass circuit, between the first connection point and the first inlet and between the third connection point and the fifth connection point, respectively;
wherein the in-vehicle circuit including:
a first pump (P1) for circulating the heat exchange medium, the first pump being provided either between the second connection point and the second inlet, between the second outlet and the third connection point or between the fifth connection point and the first connection point, wherein one of the valves (200A, 200B, 200C) is provided between the fourth connection point and the tenth connection point, between the tenth connection point and the sixth connection point and between the sixth connection point and the third inlet, respectively,
wherein the out-vehicle circuit including:
a second pump (P2) for circulating the heat exchange medium, the second pump being provided between the third outlet and the fourth connection point or between the sixth connection point and the third inlet;
wherein one of the valves (300A) is provided in the first connection passage between the fourth connection point and the seventh connection point;
wherein one of the valves (300B) is provided in the second connection passage between the eighth connection point and the sixth connection point;
wherein one of the valves (300C, 300D) is provided in the third connection passage, between the seventh connection point and the ninth connection point and between the ninth connection point and the eighth connection point, respectively:
wherein one of the valves (300E) is provided in the fourth connection passage between the ninth connection point and the tenth connection point.

6. The vehicle air conditioner according to claim 4, **characterized in that** the second face heat exchanger including:
a fifth outlet (97A) through which the heat exchange medium flows out; and
a fifth inlet (97B) through which the heat exchange medium flows in;
wherein the vehicle air conditioner further including:
a battery (99), wherein the battery including:
a sixth outlet (99A) through which the heat exchange medium flows out; and a sixth inlet (99B) through which the heat exchange medium flows in; and
a battery circulation circuit (401-404) connecting the fifth outlet and the sixth inlet and connecting the sixth outlet and the fifth inlet.

7. The vehicle air conditioner according to claim 6, **characterized in that** the battery circulation circuit communicates with the in-vehicle circuit or the connection circuit at eleventh connection point (20K) through a first joint passage (U1) and communicates with the out-vehicle circuit or the connection circuit at twelfth connection point (20L) through a second joint passage (U2), wherein one of the valves (500A, 500B) is provided in the first joint passage and the second joint passage, respectively, wherein one of the valves (400A) is provided between the fifth outlet and the eleventh connection point or between the twelfth connection point and the fifth inlet, wherein the battery circulation circuit including:
a third pump (P3) for circulating the heat exchange medium in the battery circulation circuit.

8. The vehicle air conditioner according to claim 1, **characterized in that** the connection circuit including:
a fifth connection passage (C5) connecting between the in-vehicle circuit and the out-vehicle circuit, wherein the fifth connection passage communicates with the in-vehicle and the out-vehicle circuits at thirteenth connection point (20M) which is provided between the first inlet and the second outlet and at fourteenth connection point (20N) which is provided between the third inlet and the fourth outlet, respectively; and
a sixth connection passage (C6) connecting between the in-vehicle circuit and the out-vehicle circuit, wherein the sixth connection passage communicates with the in-vehicle and the out-vehicle circuits at fifteenth connection point (20Q) which is provided between the first inlet and the second outlet and at sixteenth connection point (20R) which is provided between the third outlet and the fourth inlet, respectively;
wherein the valves including:
a three-way valve (23, 25) provided at either the thirteenth connection point or the fourteenth connection point and at either the fifteenth connection point or the sixteenth connection point, respectively.

9. The vehicle air conditioner according to claim 1, **characterized in that** the connection circuit including:
a fifth connection passage (C5) connecting between the in-vehicle circuit and the out-vehicle circuit, wherein the fifth connection passage communicates with the in-vehicle and the out-vehicle circuits at thirteenth connection point (20M) which is provided between the first inlet and the second outlet and at fourteenth connection point (20N) which is provided between the third inlet and the fourth outlet; and
a sixth connection passage (C6) connecting between the in-vehicle circuit and the out-vehicle circuit, wherein the sixth connection passage communicates with the in-vehicle and the out-vehicle circuits at fifteenth connection point (20Q) which is provided between the first inlet and the second outlet and at sixteenth connection point (20R) which is provided between the third outlet and the fourth inlet; wherein one of the valves (26B) is provided in the in-vehicle circuit between the thirteenth connection point and the fifteenth connection point,
wherein one of the valves (24B) is provided in the out-vehicle circuit between the fourteenth connection point and the third inlet,
wherein one of the valves (24A) is provided in the fifth connection passage,
wherein one of the valves (26A) is provided in the sixth connection passage.

10. The vehicle air conditioner according to claim 1, **characterized in that** the vehicle air conditioner further comprising:
a second heat pump (40), the second heat pump being provided between the in-vehicle circuit and the out-vehicle circuit for transferring heat between the heat exchange medium in the in-vehicle circuit and the heat exchange medium in the out-vehicle circuit.

11. The vehicle air conditioner according to claim 10, **characterized in that** the second heat pump is a peltier device (40).

12. The vehicle air conditioner according to any one of claims 1 through 11, **characterized in that** the heat storage unit including:
a heating and a cooling devices (31, 33) for heating or cooling at least one of the heat storage medium and the heat exchange medium.

13. The vehicle air conditioner according to any one of claims 1 through 12, **characterized in that** the vehicle air conditioner further comprising:
a desiccant type dehumidifier (50), wherein the desiccant type dehumidifier including:
a desiccant rotor (53);
a humid air passage (55), through which humidity conditioning air flows to the desiccant rotor;
a dry air passage (57), through which air dehumidified by the desiccant rotor flows out;
a regeneration air passage (59), through which regeneration air flows to the desiccant rotor; and
a humidified air passage (61), through which air humidified by absorbing moisture in the desiccant rotor flows out,
wherein the humidity conditioning air passage is opened around the first heat exchanger, wherein the dry air passage is opened to the vehicle compartment,
wherein the regeneration air passage is opened around the second heat exchanger, wherein the humidified air passage is opened outside the vehicle.

14. The vehicle air conditioner according to claim 13, **characterized in that** the regeneration air passage includes an air heating device (63) for heating the recycling air.

15. The vehicle air conditioner according to any one of claims 1 through 14, **characterized in that** the vehicle air conditioner further comprising:
a temperature detecting device (27A) for detecting temperature of the heat exchange medium in the out-vehicle circuit, wherein, when the temperature detected by the temperature detecting device exceeds a threshold value in heating mode, the control device controls the valves so that the out-vehicle circuit communicates with the in-vehicle circuit through the connection circuit.
